# EUROPEAN PATENT SPECIFICATION

(11) **EP 2 832 214 B1**
(45) Date of publication and mention of the grant of the patent: **07.09.2016**
(21) Application number: 12872813.6
(22) Date of filing: 30.03.2012
(51) Int. Cl.: A01K 11/00, A01K 29/00, A01K 67/00, G06Q 50/02, A61D 17/00

(54) **SETTING METHOD, SETTING PROGRAM, AND SETTING APPARATUS**
EINSTELLUNGSVERFAHREN, EINSTELLUNGSPROGRAMM UND EINSTELLUNGSVORRICHTUNG
PROCÉDÉ DE RÉGLAGE, PROGRAMME DE RÉGLAGE ET DISPOSITIF DE RÉGLAGE

(43) Date of publication of application: 04.02.2015
(73) Proprietor: FUJITSU LIMITED, Kawasaki-shi Kanagawa 211-8588 (JP)
(72) Inventor: UCHINO, Tetsuya, Fukuoka-shi Fukuoka 814-8589 (JP); MOTOSHIMA, Toshimi, Fukuoka-shi Fukuoka 814-8589 (JP); KANAMORI, Akihito, Fukuoka-shi Fukuoka 814-8589 (JP); INENAGA, Mitsuhisa, Fukuoka-shi Fukuoka 814-8589 (JP); WATANABE, Katsuyoshi, Fukuoka-shi Fukuoka 814-8589 (JP); YAMANO, Daiji, Kawasaki-shi Kanagawa 211-8588 (JP)
(74) Representative: Schultes, Stephan
(86) International application number: PCT/JP2012/058719
(87) International publication number: WO 2013/145303

(56) References cited:
- WO-A1-03/079773
- JP-A- 2005 520 524
- JP-A- 2008 148 569
- US-A1- 2007 008 150

## Description

### TECHNICAL FIELD

The present invention relates to a setting method, a setting program, and a setting apparatus.

### BACKGROUND ART

Conventionally, when livestock animals such as cattle are raised on a pasture, a worker of the livestock farm periodically goes to the pasture area to check whether livestock animals have an abnormality. For example, to manage estrus of pastured cows, a worker goes to the pasture area almost every day to actually visually check the presence of a cow exhibiting estrous behavior. Since livestock animals such as cattle tend to form a herd when moving, it is important for the worker to comprehend herds so as to find a specific livestock animal.

Related techniques include a technique of providing support for finding a specific livestock animal. For example, a main terminal capable of public wireless communication incorporating a global positioning system (GPS) receiver is attached to a livestock animal defined as a leader of a herd while terminals capable of short-distance communication with the main terminal is attached to the other livestock animals of the herd to enable tracking of the other livestock animals in the herd (see. e.g., Patent Document 1).

In another proposed technique, information of an activity level for dairy cow is received from a transmitter attached to the dairy cow to determine whether the dairy cow is in estrus by using past estrus history when the activity level increases (see, e.g., Patent Document 2).

Patent Document 1: Published Japanese-Translation of PCT Application WO 03/079773, Publication No. 2005-520524
Patent Document 2: Japanese Laid-Open Patent Publication No. 2004-337093
Patent Document 3: Japanese Laid-Open Patent Publication No. 2002-233284
Patent Document 4: Japanese Laid-Open Patent Publication No. 2006-230364

US2007/008150 discloses a long-range cattle identification system used to monitor a plurality of animals. The system uses a plurality of electronic information tags that are attachable to animals. The electronic information tags transmit and receive electronic information with at least one other electronic information tag. The electronic information tags are spatially disposed so that one electronic information tag can transmit and receive at least one other electronic information tag's individual electronic information to form a mesh network. The system includes a communication device that can communicate with at least one electronic information tag and receive information from that tag. The communication device can also receive the information contained in all the other electronic information tags in the mesh network through the at least one electronic information tag.

### DISCLOSURE OF INVENTION

### PROBLEM TO BE SOLVED BY THE INVENTION

However, in the conventional techniques, when a worker of a livestock farm comprehends herds, for example, the worker must periodically go to the pasture area to visually observe which livestock animal belongs to which herd, leading to a problem of an increased workload of the worker.

An object of the present invention is to provide a setting method, a setting program, and a setting apparatus capable of reducing the workload required for comprehending herds so as to solve the problem of the conventional techniques described above.

### MEANS FOR SOLVING PROBLEM

To solve the problems above and achieve an object, according to one aspect of the present invention, a setting method, a setting program, and a setting apparatus are proposed that acquire identification information of an object communications device attached to a livestock animal in a livestock animal group located in a communication area of any one of multiple relay devices disposed at different positions; determine whether a first group is set that includes identification information of a communications device attached to another livestock animal different from the livestock animal and among the livestock animal group; refer to a storage unit storing combinations of relay devices among the multiple relay devices and having an inter-relay device distance less than or equal to a predetermined value, and determine whether another relay device is present whose distance from the relay device less than or equal to the predetermined value; and set a second group including the identification information of the object communications device if the first group is not set and the other relay device is not present.

### EFFECT OF THE INVENTION

According to one aspect of the present invention, an effect is achieved in that the workload for comprehending herds can be reduced.

### BRIEF DESCRIPTION OF DRAWINGS

FIG. 1 is an explanatory view of an example of a setting method according to an embodiment;
FIG. 2 is an explanatory view of a system configuration example of a setting system 200;
FIG. 3 is a block diagram of a hardware configuration example of a communications device 101;
FIG. 4 is a block diagram of a hardware configuration example of a relay device 102;
FIG. 5 is a block diagram of a hardware configuration of a setting apparatus 104, etc.;
FIG. 6 is an explanatory view of an example of storage contents of a communications device DB 201;
FIG. 7 is an explanatory view of an example of storage contents of a relay device DB 202;
FIG. 8 is an explanatory view of an example of storage contents of a group management DB 203;
FIG. 9 is a block diagram of a functional configuration of a setting apparatus 104;
FIG. 10 is an explanatory view of an example (part one) of group setting for an object communications device ID;
FIG. 11 is an explanatory view of an example (part two) of group setting for the object communications device ID;
FIG. 12 is an explanatory view of an example (part three) of group setting for the object communications device ID;
FIG. 13 is an explanatory view of an example (part four) of group setting for the object communications device ID;
FIG. 14 is an explanatory view of an example (part five) of group setting for the object communications device ID;
FIG. 15 is an explanatory view of an example (part six) of group setting for the object communications device ID;
FIG. 16 is an explanatory view of an example (part seven) of group setting for the object communications device ID;
FIG. 17 is an explanatory view of an example (part eight) of group setting for the object communications device ID;
FIG. 18 is an explanatory view of an example (part nine) of group setting for the object communications device ID;
FIG. 19 is an explanatory view of an example (part ten) of group setting for the object communications device ID;
FIG. 20 is an explanatory view of an example of a screen displayed on the setting apparatus 104 or a client device 105;
FIG. 21 is a flowchart of an example of a communication process procedure of the relay device 102;
FIG. 22 is a flowchart (part one) of an example of a setting process procedure of the setting apparatus 104;
FIG. 23 is a flowchart (part two) of an example of the setting process procedure of the setting apparatus 104;
FIG. 24 is a flowchart (part one) of an example of a group determination process procedure of the setting apparatus 104;
FIG. 25 is a flowchart (part two) of the example of the group determination process procedure of the setting apparatus 104;
FIG. 26 is a flowchart (part three) of the example of the group determination process procedure of the setting apparatus 104;
FIG. 27 is a flowchart (part four) of the example of the group determination process procedure of the setting apparatus 104;
FIG. 28 is a flowchart (part five) of the example of the group determination process procedure of the setting apparatus 104;
FIG. 29 is a flowchart (part six) of the example of the group determination process procedure of the setting apparatus 104;
FIG. 30 is a flowchart (part seven) of the example of the group determination process procedure of the setting apparatus 104;
FIG. 31 is a flowchart (part eight) of the example of the group determination process procedure of the setting apparatus 104;
FIG. 32 is a flowchart (part nine) of the example of the group determination process procedure of the setting apparatus 104;
FIG. 33 is an explanatory view of an example of storage contents of a step count information DB 3301;
FIG. 34 is an explanatory view of an example of storage contents of an installation position information DB 3401; and
FIG. 35 is an explanatory view of an example of storage contents of a feeding/watering time DB 3501.

### BEST MODE(S) FOR CARRYING OUT THE INVENTION

Embodiments of a setting method, a setting program, and a setting apparatus according to the present invention will be described in detail with reference to the accompanying drawings.

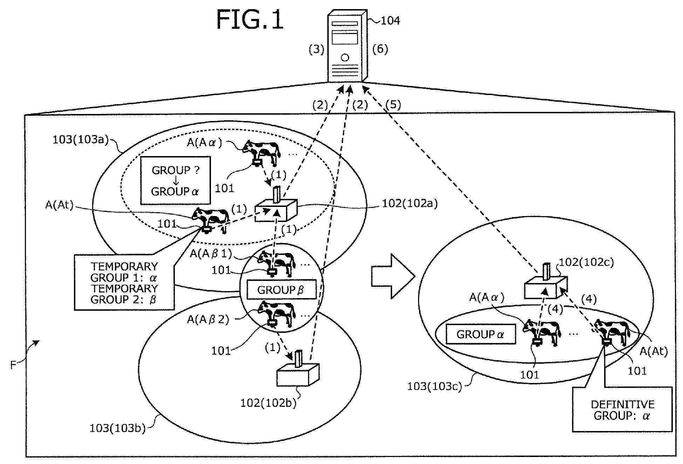

FIG. 1 is an explanatory view of an example of a setting method according to the present embodiment. In FIG. 1, multiple livestock animals A are raised within the premises of a farm F managed by a worker engaged in livestock farming. The farm F refers to facilities including the pasture area for pasturing the livestock animals A. The livestock animals A are raised animals capable of moving within the premises of the farm F, for example, the pasture area of the farm F. The livestock animals A may be animals forming a herd when moving, such as cattle, horses, and sheep.

The livestock animals A are equipped with respective communications devices 101. The communications devices 101 are portable computers transmitting communications device IDs that are identification information for identifying the livestock animals A at predetermined time intervals. The communications devices 101 can communicate with multiple relay devices 102 disposed within the premises of the farm F. The relay devices 102 are computers capable of communicating with the communications devices 101 and a setting apparatus 104 described later. The multiple relay devices 102 are respectively disposed at a different position in the farm F. The communications devices 101 transmit the identification information to a communicable relay device 102.

If the communications devices 101 are located within a communication area 103a of a relay device 102a denoted by reference numeral 102a in FIG. 1, the communications devices 101 can communicate with the relay device 102a. If the communications devices 101 are located within a communication area 103b of a relay device 102b denoted by reference numeral 102b in FIG. 1, the communications devices 101 can communicate with the relay device 102b. The communication area 103 is a range having a radius of 150 m, for example.

If a communications device ID is received from the communications device 101, the relay device 102 transmits the received communications device ID and the relay device ID thereof, which is relay device identification information, to the setting apparatus 104. The setting apparatus 104 is a computer connected to the multiple relay devices 102 to be capable of receiving the communications device IDs of the communications devices 101 and the relay device ID via any of the relay devices 102.

To facilitate comprehension of herds including livestock animals A among the pastured livestock animals A, an individual identification number is written large with paint on the bodies of the livestock animals A or earmarks are attached in some techniques. These techniques enable a worker to visually recognize individual livestock animals A. However, in the technique including writing the individual identification number on bodies of the livestock animals A, the paint may lose color over time, making the individual recognition impossible or causing false recognition. In the technique using earmarks, a worker must visually check the earmarks one-by-one and therefore, it is difficult to individually recognize the livestock animals A pastured in a large pasture area.

For example, in the case of the livestock animals A having individually different spotted patterns as in the case of Holstein cows having white and black patches, a skilled worker can individually recognize the livestock animals A; however, for example, if the number of raised animals exceeds 100, the individual recognition becomes difficult. As described above, the technique including writing the individual identification number on bodies of the livestock animals A and the technique including attaching earmarks necessitate a worker to go to the pasture area to visually check the livestock animals A one-by-one and therefore, the techniques are troublesome for the worker and cannot easily comprehend the herds.

It is also conceivable that herds are comprehended based on positional information of the livestock animals A across multiple time slots based on the assumption that a herd staying in a certain area is the same herd. However, if a livestock animal A in estrus is present in a herd, the livestock animal A in estrus may move around and often temporarily slip into another herd and therefore, a herd cannot be identified in some cases. Moreover, if a common feeding or drinking station exists, multiple herds gather in the same area in the same period and a single herd cannot be identified in some cases.

Therefore, in this embodiment, a new group is set for a livestock animal At for which no group has been set in a certain communication area 103, if no group is set for another livestock animal A in the same communication area 103a and no other communication area 103b is present within a close distance. A close distance is a distance that may allow a herd to be present across the communication areas 103a and 103b. This enables initial registration of the group including the livestock animal At, and reduces the workload required for comprehending the herds.

An example of a setting method of an embodiment will hereinafter be described. Description will be made of a case of registering into a group, a communications device ID of a target livestock animal At for which no group has been set. A group is made up of the communications device IDs of the communications devices 101 attached to the livestock animals A.

A distance between the relay device 102a and the relay device 102b is a close distance that may allow one group to be present in the both communication areas 103a and 103b. It is assumed that a group (group α) is not yet set in the communication area 103a and that a group β is already registered as a group.

The group β is located across multiple communication areas 103a, 103b. A relay device 102c is distant from the other relay devices 102a, 102b and, for example, the relay device 102c is distant from the relay devices 102a and 102b such that one group is not located across a communication area 103c and the other communication areas 103a, 103b. It is assumed that one communication area 103 does not accommodate all the animals of multiple groups.
(1) The communications device 101 transmits the communications device ID of the livestock animal A at predetermined transmission intervals to the relay device 102 located in the communication area 103. The predetermined transmission interval is one hour, for example. The respective communications device IDs are transmitted to the relay device 102a by the communications device 101 of the target livestock animal At, the communications device 101 of another livestock animal Aα for which no group has been set (group α), and the communications device 101 of a livestock animal Aβ1 included in the group P, respectively located in the communication area 103a. The communications device ID is transmitted to the relay device 102b by the communications device 101 of a livestock animal Aβ2 included in the group located in the communication area 103b.
(2) The relay device 102 receives the communications device ID from the communications device 101 and transmits to the setting apparatus 104, the received communications device ID and the relay device ID thereof, which is identification information.
(3) The setting apparatus 104 receives the communications device ID and the relay device ID from the relay device 102 and determines to which group the communications device ID of the livestock animal At belongs, based on the received communications device and relay device IDs. First, the setting apparatus 104 determines a position of the communications device 101 from the communications device ID and the relay device ID.
   For example, the setting apparatus 104 determines that the communications devices 101 of the livestock animals At, Aα, and Aβ1 are located in the communication area 103a, from the communications device IDs of the target livestock animal At, the other livestock animal Aα, and the livestock animal Aβ1 of the group β and the relay device ID. The setting apparatus 104 determines that the communications device 101 of the livestock animal Aβ2 is located in the communication area 103b, from the communications device ID of the livestock animal Aβ2 of the group β and relay device ID.
   Since no group is set in the same communication area 103a, the setting apparatus 104 generates a new group α. If the other area 103b is not present near the communication area 103a, the setting apparatus 104 may register the communications device ID of the livestock animal At into the group α. In FIG. 1, the communications device ID of the livestock animal At has a possibility of belonging to the group β and a possibility of belonging to the other group (group α) of the communication area 103a. Therefore, the setting apparatus 104 provisionally sets the group α, as a temporary group 1 and sets the group β as a temporary group 2 for the communications device ID of the target communications device 101.
   Even if all the animals of the group β are present in the communication area 103b, the livestock animal At has a possibility of belonging to the group α or β since a distance between the relay devices 102a and 120b is a close distance. Therefore, even if all the animals of the group β are present in the communication area 103b, the setting apparatus 104 sets the group α as the temporary group 1 and the group β as the temporary group 2.
(4) It is assumed that after some time has elapsed and the herds have moved, the group α is located in the communication area 103c of the relay device 102c. When predetermined timing comes, the communications device 101 of the livestock animal Aα of the group α and the communications device 101 of the target livestock animal At transmit the respective communications device IDs to the relay device 102c located in the communication area 103c.
(5) The relay device 102c receives the communications device IDs from the communications devices 101 and transmits the communications device IDs and the relay device ID to the setting apparatus 104.
(6) The setting apparatus 104 uses the communications device IDs and the relay device ID received from the relay device 102c to determine whether the communications device ID of the target communications device 101 belongs to the group α of the temporary group 1 or the group β of the temporary group 2. First, the setting apparatus 104 determines whether another one of the relay devices 102 is present near the relay device 102c. For example, the setting apparatus 104 determines whether another one of the relay devices 102 having a distance from the relay device 102c less than or equal to a predetermined value is present.

If none of the other relay devices 102 is present near the relay device 102c, i.e., if only the one group α is present within the communication area 103c, the setting apparatus 104 registers the communications device ID of the target livestock animal At into a group by using the group α as a definitive group.

According to the setting method of the embodiment described above, a group can be set for the livestock animal At for which no group has been set in the communication area 103, if no other communication area 103 is present nearby and no other livestock animal A is registered in a group in the communication area 103. As a result, the livestock animal A can be registered into a new unique group and the workload required for comprehension of herds can be reduced. Herds of livestock animals can be comprehended correctly even if a livestock animal in estrus is present or if herds are mixed due to feeding, watering, etc.

### (System Configuration Example of Setting System 200)

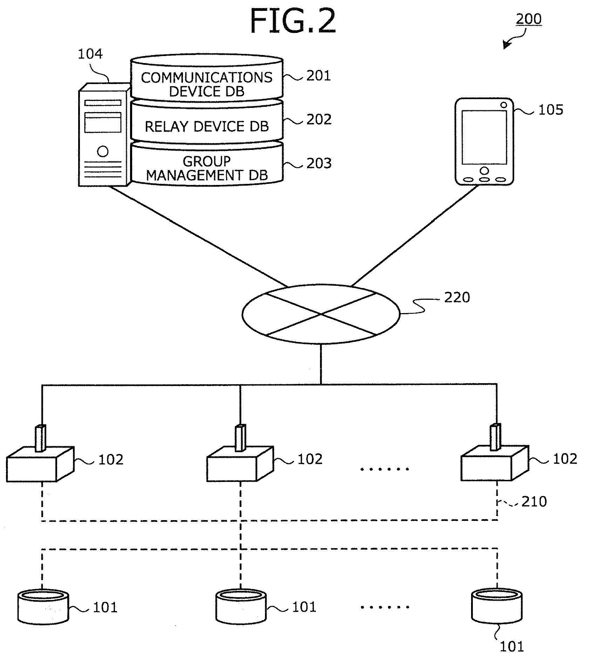

A system configuration example of a setting system 200 will be described. FIG. 2 is an explanatory view of a system configuration example of the setting system 200. In FIG. 2, the setting system 200 includes the multiple communications devices 101, the multiple relay devices 102, and the setting apparatus 104.

In the setting system 200, the communications devices 101 and the relay devices 102 are connected via a wireless communications network 210. Each of the communications devices 101 and the relay devices 102 has a given range around the communications device or the relay device, for example, a range of a 100-meter radius around the communications device or the relay device, as a communicable area enabling communication through the wireless communications network 210. If the communications device 101 and the relay device 102 are in a positional relationship enabling the communication, the communications device 101 and the relay device 102 are connected through the wireless communications network 210. For example, the wireless communications network 210 can be implemented by applying near field communication such as radio frequency identification (RFID).

The relay devices 102, the setting apparatus 104, and the client apparatus 105 are connected via a network 220. For example, the network 220 may be the Internet, a local area network (LAN), a wide area network (WAN), etc.

The communications devices 101 have measurement result information tables, etc., and are portable computers equipped to the respective livestock animals A raised in the farm F. Each of the communications devices 101 has a time measuring function and a communication function through the wireless communications network 210. For example, the communications devices 101 can be implemented by applying pedometers to which a communication function through the wireless communications network 210 is added. At given intervals, each communications device 101 transmits a communications device ID, which is identification information of the livestock animal A, to a relay device 102, via the communications network 210.

The relay devices 102 are disposed on the premises of the farm F and are computers having a communication function through the wireless communications network 210 and a communication function through the network 220. The multiple relay devices 102 are respectively disposed at different installation positions.

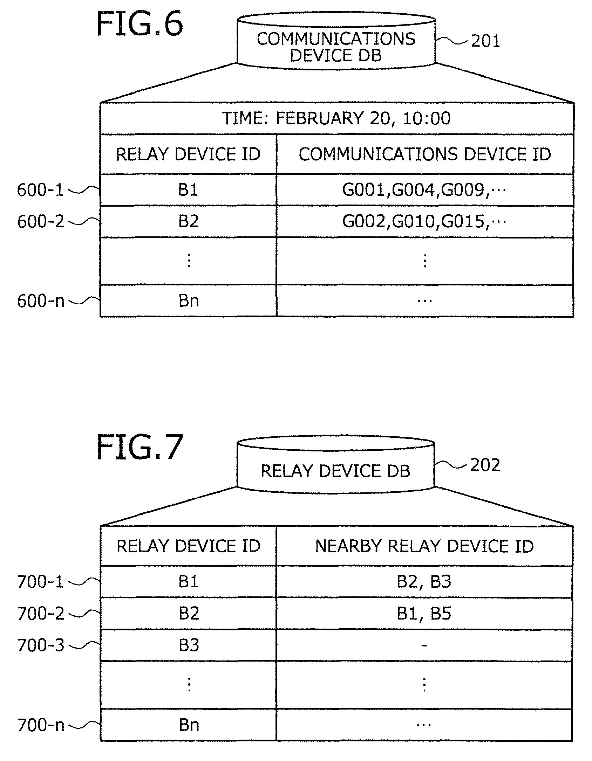

The setting apparatus 104 has a relay device DB 202, a group management DB 203, etc., and is a computer having a communication function through the network 220. For example, the setting apparatus 104 can be implemented by applying a server included in a cloud computing system and a personal computer (PC) or a notebook PC used by a manager or a worker W of the farm F. Storage contents of the relay device DB 202 and the group management DB 203 will be described later with reference to FIGs. 6 to 8.

The client apparatus 105 is a computer having a communication function through the network 220. The client apparatus 105 can be implemented by applying a PC or a notebook PC, a portable telephone, and a smartphone used by a worker W of the farm F.

### (Hardware Configuration Example of Communications Device 101)

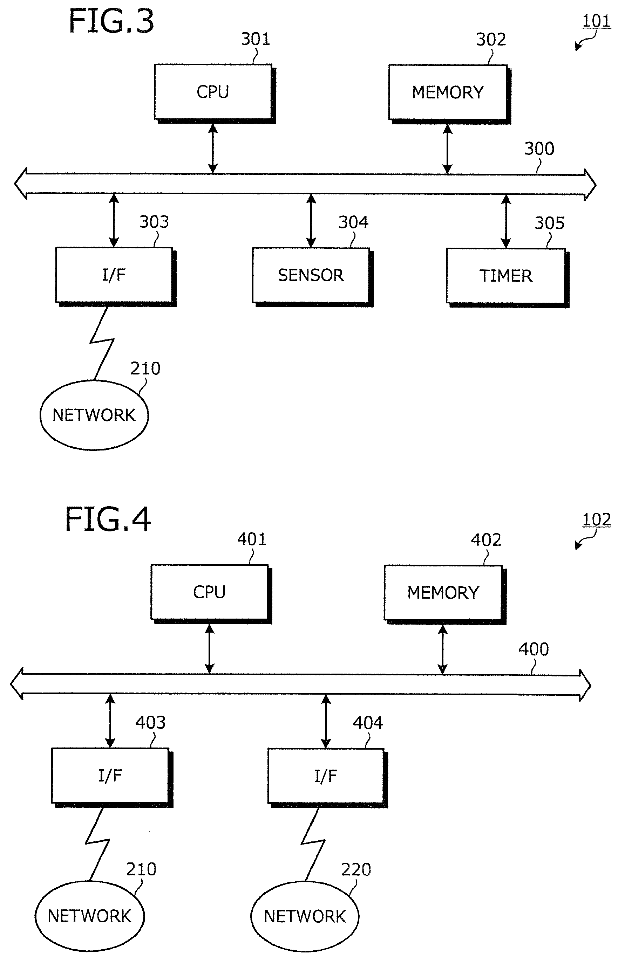

A hardware configuration example of the communications device 101 will be described. FIG. 3 is a block diagram of a hardware configuration example of the communications device 101. In FIG. 3, the communications device 101 has a central processing unit (CPU) 301, memory 302, an interface (I/F) 303, a sensor 304, and a timer 305. The constituent elements are connected to each other through a bus 300.

The CPU 301 is responsible for general control of the communications device 101. The memory 302 includes read only memory (ROM), random access memory (RAM), and flash ROM. The ROM and the flash ROM store various programs such as a boot program, for example. The RAM is used as a work area of the CPU 301.

The I/F 303 is connected through a communication line to the wireless communications network 210 and is connected via the wireless communications network 210 to another device (such as the relay device 102). The I/F 303 is responsible for an internal interface with the wireless communications network 210 and controls the input and output of data with respect to external devices.

The sensor 304 outputs information for detecting behavior of the communications device 101. For example, the sensor 304 is implemented by using a gyro sensor, a three-axis acceleration sensor, etc., and when acceleration occurs in the communications device 101, the sensor 304 outputs information corresponding to the acceleration. The communications device 101 has a function of a pedometer because of the sensor 304. By using the function of a pedometer, an abnormal state of the livestock animal A can be managed through utilization of a characteristic that the number of steps taken by the livestock animal A per unit time varies in an abnormal state such as estrus and disease, for example. A configuration without the sensor 304 is also available for the communications device 101.

The timer 305 has a time measuring function. For example, the timer 305 measures the actual time. The timer 305 may measure an elapsed time from a given time.

### (Hardware Configuration Example of GPS Communications Device 107)

A hardware configuration example of the relay device 102 will be described. FIG. 4 is a block diagram of a hardware configuration example of the relay device 102. In FIG. 4, the relay device 102 has a CPU 401, memory 402, an I/F 403, and an I/F 404. The constituent elements are connected to each other through a bus 400.

The CPU 401 is responsible for general control of the relay device 102. The memory 402 includes ROM, RAM, and flash ROM. The ROM and the flash ROM store various programs such as a boot program, for example. The RAM is used as a work area of the CPU 401.

The I/F 403 is connected through a communications line to the wireless communications network 210 and is connected via the wireless communications network 210 to another device such as the communications device 101. The I/F 404 is connected through a communications line to the network 220 and is connected via the network 220 to another device such as the setting apparatus 104. The I/F 403 and the I/F 404 are responsible for an internal interface with the wireless communications network 210 and with the network 220, and control the input and output of data with respect to external devices.

### (Hardware Configuration Example of Setting Apparatus 104, etc.)

A hardware configuration example of the setting apparatus 104 and the client device 105 will be described. In this example, the setting apparatus 104 and the client device 105 will simply be referred to as the "setting apparatus 104, etc."

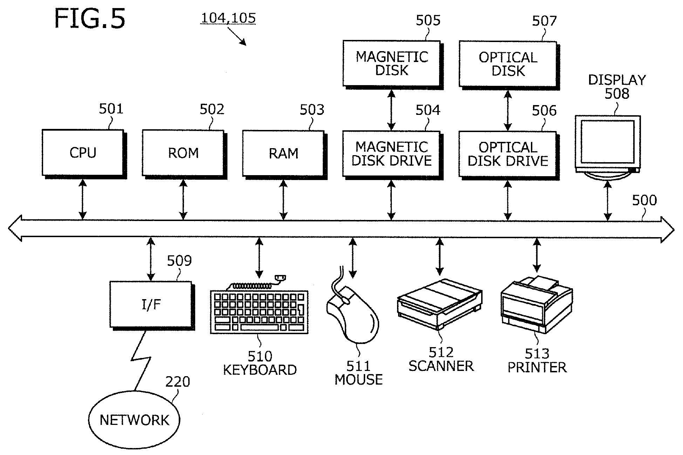

FIG. 5 is a block diagram of a hardware configuration of the setting apparatus 104, etc. In FIG. 5, the setting apparatus 104, etc. have a CPU 501, a ROM 502, a RAM 503, a magnetic disk drive 504, a magnetic disk 505, an optical disk drive 506, an optical disk 507, a display 508, an I/F 509, a keyboard 510, a mouse 511, a scanner 512, and a printer 513. The constituent units are connected via a bus 500 to each other.

The CPU 501 is responsible for general control of the setting apparatus 104. The ROM 503 stores various programs such as a boot program, for example. The RAM 503 is used as a work area of the CPU 501. The magnetic disk drive 504, under the control of the CPU 501, controls the reading and writing of data with respect to the magnetic disk 505. The magnetic disk 505 stores therein data written under control of the magnetic disk drive 504.

The optical disk drive 506, under the control of the CPU 501, controls the reading and writing of data with respect to the optical disk 507. The optical disk 507 stores therein data written under control of the optical disk drive 506, the data being read by a computer.

The display 508 displays, for example, data such as text, images, functional information, etc., in addition to a cursor, icons, and/or tool boxes. A cathode ray tube (CRT), a thin-film-transistor (TFT) liquid crystal display, a plasma display, etc., may be employed as the display 508.

The I/F 509 is connected to the network 220 through a communication line and is connected to other apparatuses (e.g., the relay devices 102 and the client apparatus 105) through the network 220. The I/F 509 administers an internal interface with the network 220 and controls the input and output of data with respect to external apparatuses. For example, a modem or a LAN adaptor may be employed as the I/F 509.

The keyboard 510 includes, for example, keys for inputting letters, numerals, and various instructions and performs the input of data. Alternatively, a touch-panel-type input pad or numeric keypad, etc. may be adopted. The mouse 511 is used to move the cursor, select a region, or move and change the size of windows. A track ball or a joy stick may be adopted provided each respectively has a function similar to a pointing device.

The scanner 512 optically reads an image and takes in the image data into the setting apparatus 104. The scanner 512 may have an optical character reader (OCR) function as well. The printer 513 prints image data and text data. The printer 513 may be, for example, a laser printer or an ink jet printer.

Further, for example, among the components described above, the setting apparatus 104 may be configured to omit the optical disk drive 506, the optical disk 507, the display 508, the mouse 511, the scanner 512, and the printer 513. The client apparatus 105 may be configured to omit the optical disk drive 506, the optical disk 507, the mouse 511, the scanner 512, and the printer 513.

### (Example of Information Stored by Setting Apparatus 104)

An example of information stored by the setting apparatus 104 will be described. As described above, the setting apparatus 104 stores various DBs 201, 202, and 203. The various DBs 201, 202, and 203 are implemented by using a storage unit such as the ROM 502, the RAM 503, the magnetic disk 505, and the optical disk 507 of the setting apparatus 104.

### <Example of Storage Contents of Communications Device DB 201>

FIG. 6 is an explanatory view of an example of storage contents of the communications device DB 201. In FIG. 6, the communications device DB 201 has fields for relay device IDs and communications device IDs for each reception time. By setting information in these fields, records of communications device information 600-1 to 600-n are stored as a record for each combination of a relay device ID and a communications device ID in the communications device DB 201.

The reception time refers to a time when the relay device IDs of the relay devices 120 and the communications device IDs are received from the relay devices 102. The IDs are received from the relay devices 102 at intervals of one hour, for example. The relay device IDs are identification information for identifying the relay devices 102. The communications device IDs are identification information for identifying the communications devices 101.

For example, the communications device information 600-1 indicates that the communications device IDs are transmitted from the communications devices 101 via the relay device ID "B1" at "10:00 on February 20". In other words, the communications device information 600-1 indicates that the communications devices 101 of the communications device IDs "G001, G004, G009, ..." are located in the communication area of the relay device 102 of the relay device ID "B1" at "10:00 on February 20".

### <Example of Storage Contents of Relay Device DB 202>

FIG. 7 is an explanatory view of an example of storage contents of the relay device DB 202. In FIG. 7, the relay device DB 202 has fields for relay device IDs and nearby relay device IDs. By setting information in these fields, records of relay device information 700-1 to 700-n are stored as a record for each combination of a relay device ID and a nearby relay device ID in the relay device DB 202.

The nearby relay device ID is identification information indicative of another one of the relay devices 102 having a distance from the relay device 102 less than or equal to a predetermined value. The predetermined value is a value indicative of whether one group corresponding to a herd of the livestock animals A may be located in both the communication area 103 of one relay device 102 and the communication area 103 of another relay device 102. A distance less than or equal to the predetermined value means that if the other relay device 102 having a distance from the one relay device less than or equal to the predetermined value is present, one group may be located across both the communication area 103 of the one relay devices and the communication area 103 of the other relay device 102.

For example, the relay device information 700-1 indicates the presence of relay device IDs "B2, B3" having a distance from the relay device of the relay device ID "B1" less than or equal to the predetermined value. In other words, the relay device information 700-1 indicates that a group located in the communication area 103 of the relay device ID "B1" may also be located in the communication area 103 of the relay device ID "B2" or the relay device ID "B3". For example, the relay device information 700-3 indicates the absence of a relay device ID having a distance from the relay device of the relay device ID "B3" less than or equal to the predetermined value.

### <Example of Storage Contents of Group Management DB 203>

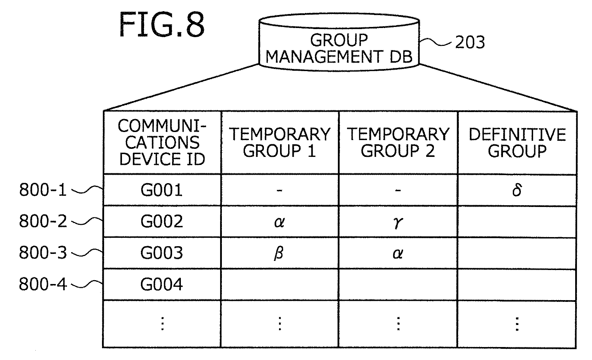

FIG. 8 is an explanatory view of an example of storage contents of the group management DB 203. In FIG. 8, the group management DB 203 has fields for communications device IDs, temporary groups 1, temporary groups 2, and definitive groups. By setting information in these fields, records of group information 800-1 to 800-n are stored as a record for each combination of a communications device ID, a temporary group 1, a temporary group 2, and a definitive group.

The temporary group 1 represents a group that is a most promising first candidate. The temporary group 2 represents a group that is a second candidate. The definitive group is a group decided as a group including the communications device ID.

For example, the group information 800-1 indicates that the communications device 101 of a communications device ID "G001" is registered in a definitive group "δ". If a communications device ID is registered in a definitive group, the temporary groups 1 and 2 are not set. The group information 800-2 indicates that the communications device 101 of a communications device ID "G002" has "α" and "γ" set as the temporary group 1 and the temporary group 2, respectively, and is not yet registered in the definitive group.

The group information 800-4 indicates that the communications device 101 of a communications device ID "G004" does not have setting of the temporary groups 1 and 2 and is not registered in the definitive group, representing a state when the setting of the temporary groups or the registration into the definitive group is newly performed.

### (Functional Configuration Example of Setting Apparatus 104)

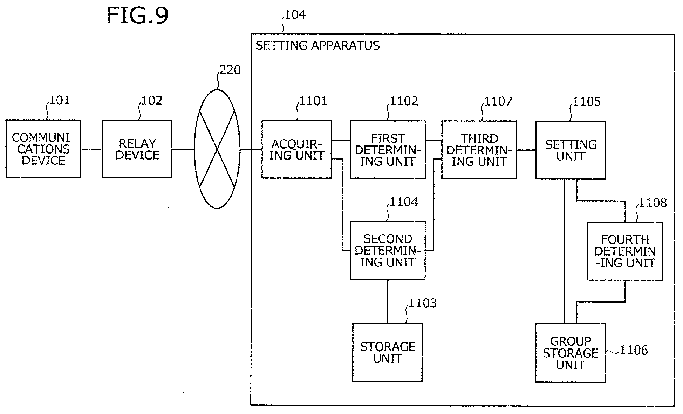

FIG. 9 is a block diagram of a functional configuration of the setting apparatus 104. In FIG. 9, the setting apparatus 104 includes an acquiring unit 1101, a first determining unit 1102, a storage unit 1103, a second determining unit 1104, a setting unit 1105, a group storage unit 1106, a third determining unit 1107, and a fourth determining unit 1108. The functions (the acquiring unit 1101 to the fourth determining unit 1108) acting as a control unit are implemented by causing the CPU 501 to execute a program stored in the magnetic disk 505 depicted in FIG. 5, for example, or by the magnetic disk 505, etc. Processing results of the functional units are stored in the RAM 503, for example.

The acquiring unit 1101 has a function of acquiring the identification information of an object communications device 101 attached to any livestock animal A in a livestock animal group located in a communication area of any of the multiple relay devices 102 disposed at different positions. The identification information of the object communications device 101 is the identification information of the communication 101 that is an object of determination of the setting of temporary groups or the registration into a definitive group described later. The identification information is a communications device ID. The "identification information of the object communications device 101" will hereinafter be referred to as an "object communications device ID".

In this example, the relay device 102 receives the communications device IDs from the communications devices 101 at intervals of one hour, for example, and transmits the relay device ID thereof and the received communications device IDs to the setting apparatus 104. The setting apparatus 104 stores the communications device IDs and the relay device ID received from the relay device 102 into a predetermined storage device such as the communications device DB 201. The acquiring unit 1101 acquires the object communications device ID from the communications device DB 201. The timing of acquisition of the communications device ID by the acquiring unit 1101 is assumed to be the timing when the setting apparatus 104 receives all the communications device IDs from the relay device 102 and completely stores all the communications device IDs into the communications device DB 201.

The first determining unit 1102 has a function of determining whether a first group is set. The first group is a group in the same communication area 103 including a communications device ID of a communications device attached to another livestock animal different from the livestock animal A equipped with the object communications device 101. For example, the first group is a group that is a definitive group in which the other communications device IDs in the same communication area 103 are registered. Therefore, the first determining unit 1102 determines whether a communications device ID registered in the first group is present in the same communication area 103 as the communication area 103 in which the object communications device ID is located.

The storage unit 1103 has a function of storing a combination of the relay devices 102 having a distance between the relay devices 102 less than or equal to a predetermined value out of the multiple relay devices 102. For example, for each of the relay devices 102, the storage unit 1103 stores the other relay devices 120 having a distance from the relay device 102 less than or equal to the predetermined value. For example, for the relay device ID "B1", the storage unit 1103 stores the relay device IDs "B2, B3" of the other relay devices 102 having a distance from the relay device 102 less than or equal to the predetermined value. For example, the storage unit 1103 stores the relay device DB 202 depicted in FIG. 7.

The predetermined value is a value allowing one communication area 103 to interpose between the communication areas 103 of the relay devices 102. A distance less than or equal to the predetermined value is a distance that may allow one group corresponding to a herd of the livestock animals A to be located across both the communication area 103 of the one relay device 102 and the communication area 103 of the other relay device 102.

The predetermined value will be described with a specific example. For example, since the radius of the communication area 103 is 150 m in the embodiment, the distance between the relay devices 102 is 300 m even if the relay devices 102 are closest to each other. The predetermined value is set to a value such that one communication area 103 having a diameter of 300 m is interposed between the communication areas 103 of the relay devices 102, i.e., such that a distance between the relay devices 102 is 600 m. Therefore, a distance less than or equal to the predetermined value is less than or equal to 600 m.

The second determining unit 1104 has a function of referring to the storage unit 1103 to determine whether another one of the relay devices 102 is present that has a distance from the relay device 102 less than or equal to the predetermined value.

The setting unit 1105 has a function of setting a second group including the object communications device ID if the first group is not set while none of the other relay devices 102 is present. If the first group is not set, this particularly means that no other communications device ID in the same communication area 103 is registered in a definitive group. When none of the other relay devices 102 is present, this means that none of the other relay devices 102 is closely located at a distance between the relay devices 102 less than or equal to the predetermined value.

For example, if no other communications device ID in the same communication area 103 is registered in a group and none of the other relay devices 102 is present nearby, the setting unit 1105 sets the second group including the object communications device ID. The second group is a group with a name newly generated. Therefore, for example, if no other communications device ID in the same communication area 103 is registered in a group (the first group) and none of the other relay devices 102 is present nearby, the setting unit 1105 sets a new group (the second group) for the object communications device ID. The setting unit 1105 registers the object communications device ID by using the group newly set for the object communications device ID as the definitive group. The information of the group of the registration is stored into the group storage unit 1106.

As a result, if no other communications device ID in the same communication area 103 is registered in a group and none of the other relay devices 102 is present nearby, the object communications device ID can be registered into a new group. Therefore, the object communications device ID can be registered into a unique group without registration to another group.

If the first group is set and none of the other relay devices 102 is present, the setting unit 1105 registers the object communications device ID into the first group. When the first group is set, this means that another communications device ID in the same communication area 103 is registered in a group. Therefore, if another communications device ID in the same communication area 103 is registered in a group p (the first group) and none of the other relay devices 102 is present nearby, the setting unit 1105 sets the object communications device ID into the group p (the first group).

As a result, if another communications device ID in the same communication area 103 is registered in a group (the first group) and none of the other relay devices 102 is present nearby, the object communications device ID not registered in a group can be registered into the uniquely set first group.

The third determining unit 1107 has a function of determining whether a third group is set if the first group is set while another one of the relay devices 102 is present nearby. The third group is a group including a communications device ID of the communications device 101 attached to any livestock animal located in the communication area 103 of the other nearby relay device 102.

For example, the third group is a group that is a definitive group in which a communications device ID located in the communication area 103 of the other nearby relay device 102 is registered. The communication area 103 of the other nearby relay device 102 will hereinafter be referred to as a "nearby area" as needed. If a group (the first group) is set for another communications device ID in the same communication area 103 and the relay device 102 is present nearby, the third determining unit 1107 determines whether a group (the third group) is set for a communications device ID located in the nearby area.

If the third group is not set, the setting unit 1105 registers the object communications device ID into the first group. Therefore, if a communications device ID in the same communication area 103 is registered in the group p (first group) and a communications device ID in the nearby area is not registered in a group, the setting unit 1105 registers the object communications device ID into the group p.

As a result, if another communications device ID in the same communication area 130 is registered in a group and a communications device ID registered in a group is not present in the nearby area, the object communications device ID not registered in a group can be registered into the uniquely set first group.

If the third group is set, the setting unit 1105 sets the first group and the third group as group candidates including the object communications device ID. Therefore, if a communications device ID in the same communication area 103 is registered in the group p (first group) and a communications device ID in the nearby area is registered in a group q (the third group), the setting unit 1105 sets group candidates for the object communications device ID. The group candidates are temporary groups and are a most promising temporary group 1 and a next promising temporary group 2, for example.

For example, the temporary group 1 may be the group p (first group) set for a communications device ID in the same communication area and the temporary group 2 may be the group q (third group) set for a communications device ID in the nearby area. The set group information is stored in the group storage unit 1106.

As a result, if another communications device ID in the same communication area 103 is registered in a group and a communications device ID registered in a group is present in the nearby area, the groups can be set as the temporary groups of the object communications device ID.

If the first group is not set and another one of the relay devices 102 is present, the third determining unit 1107 determines whether the third group is set. If the third group is not set, the setting unit 1105 sets the second group including the object communications device ID. Therefore, if a communications device ID in the same communication area 103 is not registered in a group and a communications device ID in the nearby area is not registered in a group, the setting unit 1105 sets a new group (the second group) for the object communications device ID.

As a result, if another communications device ID in the same communication area 103 is not registered in a group and a communications device ID registered in a group is not present in the nearby area, the object communications device ID can be registered in a new uniquely set group.

If the third group is set, the third determining unit 1107 sets the second group and the third group as group candidates including the object communications device ID. Therefore, if a communications device ID in the same communication area 103 is not registered in a group and a communications device ID in the nearby area is registered in a group, the setting unit 1105 sets a new group or the group including the communications device ID in the nearby area as a candidate for the object communications device ID.

For example, the newly set group (second group) may be set as the temporary group 1 while the group (third group) with the communications device ID in the nearby area registered may be set as temporary group 2.

As a result, if another communications device ID in the same communication area 103 is not registered in a group and a communications device ID registered in a group is present in the nearby area, the new group or the group in the nearby area can be set as a temporary group of the object communications device ID.

If multiple groups are present in the same communication area 103, the setting of the temporary group 1 and the temporary group 2 may be set depending on the number of the communications device IDs of each group located in the same communication area 103. For example, a group having the largest number of the communications device IDs in the same communication area 103 may be set as the temporary group 1, and a group having the next largest number of the communications device IDs in the same communication area 103 may be set as the temporary group 2.

After the group candidates are set, the acquiring unit 1101 acquires the object communications device ID attached to the livestock animal A located in the communication area 103 of any of the multiple relay devices 102. The acquiring unit 1101 refers to the communications device DB 201 to acquire the object communications device ID.

The setting unit 1105 registers the object communications device ID into a group including the communications device ID of the communications device 101 attached to another livestock animal A located in the communication area 103 of the relay device 102 out of the group candidates. For example, if none of the other relay devices 102 is present nearby or no communications device ID is present in the nearby area, the setting unit 1105 registers the object communications device ID into a group in which another communications device ID in the same communication area 103 is registered, out of the group candidates.

As a result, the object communications device ID can be registered in the same group as the other communications device ID in the same communication area 103.

The fourth determining unit 1108 uses the group information stored in the group storage unit 1106 to determine whether any of the groups having the communications device IDs registered is the same as a group set as either the temporary group 1 or 2 that is a group candidate. For example, the fourth determining unit 1108 determines whether either the temporary group 1 or 2 is included in the groups having the communications device IDs registered from the communications devices 101 located in the other communication areas 103 other than the same communication area 103 as the object communications device 101 and the nearby area.

If the fourth determining unit 1108 determines that either the temporary group 1 or 2 is included, the setting apparatus 104 registers the object communications device ID into the other group other than the group set as the temporary group 1 or 2. For example, when the group p and the group q are set as the temporary groups 1 and 2, respectively, if the communications device ID located in the other communication area 103 is registered in the group p, the object communications device ID does not belong to the group p. Therefore, the setting unit 1105 registers the object communications device ID into the group q other than the group p.

As a result, the object communications device ID can be registered into one of the groups set as the temporary groups, excluding the group to which the other communications device ID belongs.

If the object communications device ID is acquired, the first determining unit 1102 determines whether a group including the object communications device ID is set. The process of determining whether the first group is set is a process of determining whether the first group including the communications device ID of the other communications device 101 in the same communication area 103 is set when a group including the object communications device ID is not set.

For example, if the object communications device ID is not registered in a group or the temporary groups are set for the object communications device ID, it is determined whether another communications device ID in the same communication area 103 is registered in a group. In other words, if the object communications device ID is registered in a group, it is not determined whether another communications device ID in the same communication area 103 is registered in a group.

If the object communications device ID is acquired, the second determining unit 1104 determines whether a group including the object communications device ID is set. The process of determining whether another relay device is present is a process of determining whether another one of the relay devices 102 is present at a distance less than or equal to the predetermined value from the relay device 102 by reference to the storage unit 1103 if the group is not set.

For example, if the object communications device ID is not registered in a group or the temporary groups are set for the object communications device ID, it is determined whether another one of the relay devices 102 is present. In other words, if the object communications device ID is registered in a group, it is not determined whether another one of the relay devices 102 is present.

As a result, if the object communications device ID is registered in a group, subsequent determination can be prevented in terms of whether the first group is set and whether another one of the relay devices 102 is present.

### (Example of Group Setting for Object Communications Device ID)

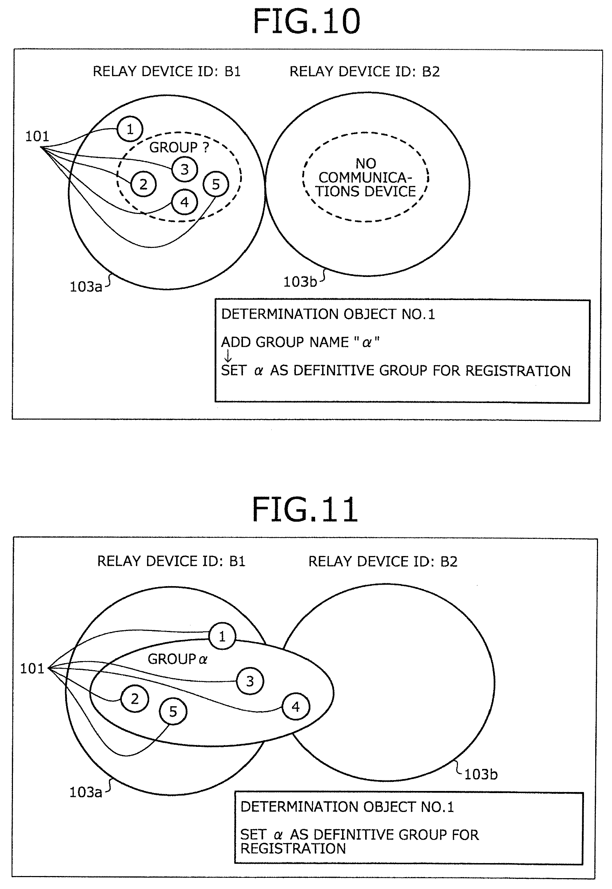

An example of group setting for the object communications device ID will be described with reference to FIGs. 10 to 19. FIG. 10 is an explanatory view of an example (part one) of group setting for the object communications device ID. In FIG. 10, the two relay devices 102 are present and the relay devices 102 form the communication areas 103.

A distance between the two relay devices 102 is a close distance that may allow one group to be present in both the communication areas 103a and 103b. In FIGs. 10 to 19, it is assumed that one of the communication areas 103 does not accommodate all the animals of multiple groups, and determination is made assuming that No. 1 is the object communications device 101.

In the communication area 103a, the multiple communications devices 101 attached to the multiple livestock animals A are located. In communication area 103b, none of the communications devices 101 is present. It is assumed that none of the communications device IDs of the communications devices 101 from No. 1 to No. 5 in the communication area 103a is registered in a group. In the state of FIG. 10, since no other group is present in the communication area 103b, a group name of a group α is newly added and the communications device ID of the object communications device 101 of No. 1 is registered into the group α defined as the definitive group.

FIG. 11 is an explanatory view of an example (part two) of group setting for the object communications device ID. The communications devices 101 are located in both the communication areas 103a, 103b. It is assumed that all the communications device IDs of the communications devices 101 from No. 2 to No. 5 of the communication areas 103a, 103b are registered in the group α.

In the state of FIG. 11, since no other group is present in the communication area 103b close to the communication area 103a, the object communications device 101 of No. 1 belongs to the group α. Therefore, the object communications device 101 of No. 1 is registered into the group α defined as the definitive group.

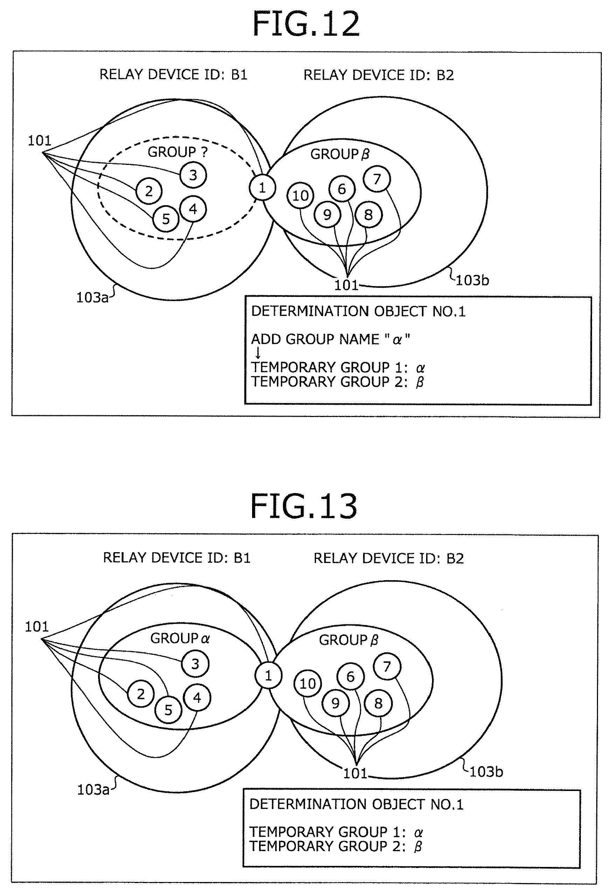

FIG. 12 is an explanatory view of an example (part three) of group setting for the object communications device ID. The multiple communications devices 101 are located in each of the communication areas 103a, 103b. It is assumed that all the communications device IDs of the communications devices 101 from No. 6 to No. 10 of the communication area 103b are registered in a group β. It is assumed that none of the communications device IDs of the communications devices 101 from No. 1 to No. 5 of the communication area 103a is registered in a group.

In the state of FIG. 12, since the other group β is present in the communication area 103b close to the communication area 103a, the object communications device 101 of No. 1 has a possibility of belonging to the group β. The object communications device 101 of No. 1 is in the communication area 103 different from that of the group β and therefore has a possibility of belonging to another group in the communication area 103a including the object communications device 101. Therefore, for the communications device ID of the object communications device 101 of No. 1, the group α is newly added and the group α of the communication area 103a including the object communications device 101 is set as the temporary group 1 while the group β is set as the temporary group 2.

FIG. 13 is an explanatory view of an example (part four) of group setting for the object communications device ID. The multiple communications devices 101 are located in each of the communication areas 103a, 103b. It is assumed that the communications device IDs of the communications devices 101 from No. 2 to No. 5 of the communication area 103a are registered in the group α. It is assumed that the communications device IDs of the communications devices 101 from No. 6 to No. 10 of the communication area 103b are registered in the group p.

In the state of FIG. 13, the object communications device 101 of No. 1 has a possibility of belonging to the group α of the communication area 103a including the object communications device 101. Since the other group β is present in the communication area 103b close to the communication area 103a, the object communications device 101 of No. 1 has a possibility of belonging to the group β. Therefore, for the communications device ID of the object communications device 101 of No. 1, the group α of the communication area 103a including the object communications device 101 is set as the temporary group 1 while the group β is set as the temporary group 2.

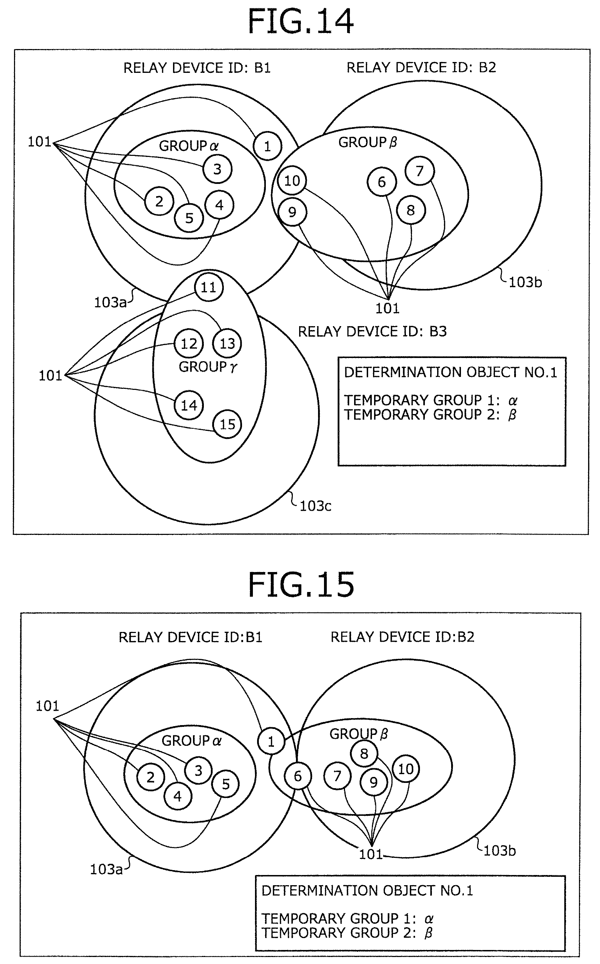

FIG. 14 is an explanatory view of an example (part five) of group setting for the object communications device ID. The multiple communications devices 101 are located in each of the communication areas 103a, 103b, and 103c. It is assumed that the communications device IDs of the communications devices 101 from No. 2 to No. 5 of the communication area 103a are registered in the group α. It is assumed that the communications device IDs of the communications devices 101 from No. 6 to No. 10 of the communication area 103a are registered in the group β. It is assumed that the communications device IDs of the communications devices 101 from No. 11 to No. 15 of the communication area 103c are registered in the group γ.

In the state of FIG. 14, the object communications device 101 of No. 1 has a possibility of belonging to the group α of the communication area 103a including the object communications device 101. Since another group β is present in the communication area 103b close to the communication area 103a, the object communications device 101 of No. 1 has a possibility of belonging to the group β. Since a further group γ is present in the communication area 103c close to the communication area 103a, the object communications device 101 of No. 1 has a possibility of belonging to the group γ.

Among the groups α, β, and γ, the group α is the group having the largest number of the communications devices 101 present in the communication area 103a including the object communications device 101. Among the groups α, β, and γ, the group β is the group having the second largest number of the communications devices 101 present in the communication area 103a including the object communications device 101, next to the group α.

Therefore, the group α having the largest number of the communications devices 101 in the communication area 103a including the object communications device 101 is set as the temporary group 1 of the communications device ID of the object communications device 101 of No. 1. The group β having the second largest number of the communications devices 101 in the communication area 103a is set as the temporary group 2.

FIG. 15 is an explanatory view of an example (part six) of group setting for the object communications device ID. In the description of FIGs. 15 to 19, after the temporary groups 1 and 2 are set for the communications device ID of the object communications device 101 of No. 1, the temporary groups 1 and 2 are reset or the corresponding communications device ID is registered into a group. In FIGs. 15 to 19, it is assumed that, for example, one hour has elapsed after the temporary groups 1 and 2 are set and that the communications device IDs and the relay device IDs are acquired again.

In FIGs. 15 to 19, for the communications device ID of the object communications device 101 of No. 1, the group α present in the communication area 103a of the object communications device 101 is set as the temporary group 1 and the group β present in the nearby communication area 103b is set as the temporary group 2 as described with reference to FIGs. 12 and 14.

In FIG. 15, the group α is present in the communication area 103a and the group P is present in the nearby communication area 103b. In this case, the object communications device 101 of No. 1 still has a possibility of belonging to the group α present in the communication area 103a including the object communications device 101 and a possibility of belonging to the group β present in the nearby communication area 103b. The object communications device 101 of No. 1 and the group α are located in the same communication area 103a while the group β is located in the nearby communication area 103b, and the positional relationship of the object communications device 101, the group α, and the group β is not changed.

Therefore, the temporary groups 1 and 2 are not changed, i.e., the group α remains set as the temporary group 1 while the group βremains set as the temporary group 2 for the communications device ID of the object communications device 101 of No. 1.

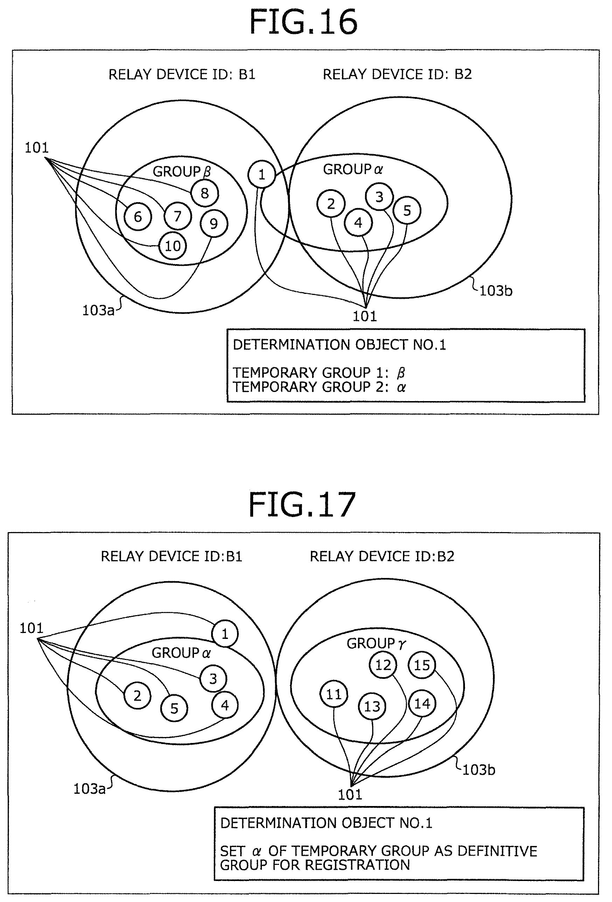

FIG. 16 is an explanatory view of an example (part seven) of group setting for the object communications device ID. In the description of FIG. 16, as is the case with FIG. 15, after the temporary groups 1 and 2 are set for the communications device ID of the object communications device 101 of No. 1, the temporary groups 1 and 2 are reset. In FIG. 16, the group β is present in the communication area 103a and the group α is present in the communication area 103b. In other words, the communication areas 103a and 103b having the groups α and β are interchanged.

The object communications device 101 of No. 1 and the group β are located in the same communication area 103a while the group α is located in the nearby communication area 103b, and the positional relationship of the object communications device 101, the group α, and the group β is not changed. Therefore, the object communications device ID has a higher possibility of belonging to the group β than the group α. Thus, the temporary groups 1 and 2 are interchanged, i.e., the group β is set as the temporary group 1 while the group α is set as the temporary group 2 for the communications device ID of the object communications device 101 of No. 1.

FIG. 17 is an explanatory view of an example (part eight) of group setting for the object communications device ID. In the description of FIGs. 17 to 19, after the temporary groups 1 and 2 are set for the communications device ID of the object communications device 101 of No. 1, the corresponding communications device ID is registered into a definitive group.

In FIG. 17, the group α set as the temporary group 1 is present in the communication area 103a and the group γ not set as a temporary group is present in the communication area 103b. The object communications device 101 of No. 1 has a possibility of belonging to the group α present in the communication area 103a including the object communications device 101. On the other hand, since the group γ present in the nearby communication area 103b is not set as a temporary group, the object communications device 101 has no possibility of belonging to the group γ. Therefore, the group α set as the temporary group 1 is defined as the definitive group to register the communications device ID of the object communications device 101 of No. 1.

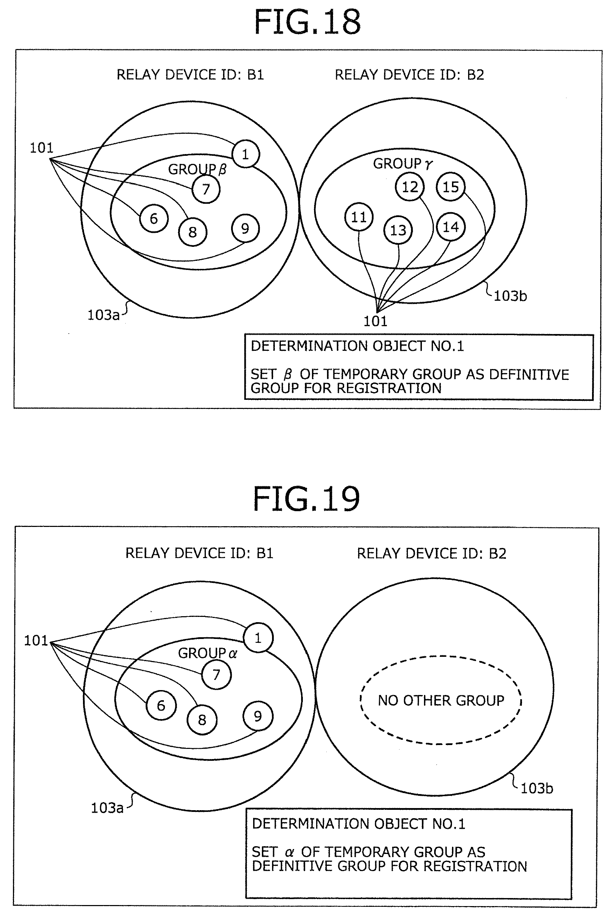

FIG. 18 is an explanatory view of an example (part nine) of group setting for the object communications device ID. In FIG. 18, the group β set as the temporary group 2 is present in the communication area 103a and the group γ not set as a temporary group is present in the communication area 103b. The object communications device 101 of No. 1 has a possibility of belonging to the group P present in the communication area 103a including the object communications device 101.

On the other hand, since the group γ present in the nearby communication area 103b is not set as a temporary group, the object communications device 101 has no possibility of belonging to the group γ. Therefore, the group P set as the temporary group 2 is defined as the definitive group to register the communications device ID of the object communications device 101 of No. 1.

FIG. 19 is an explanatory view of an example (part ten) of group setting for the object communications device ID. In FIG. 19, the group α set as the temporary group 1 is present in the communication area 103a and no group is present in the communication area 103b. In this case, the object communications device 101 of No. 1 only has a possibility of belonging to the group α present in the communication area 103a including the object communications device 101. Therefore, the group α set as the temporary group 1 is defined as the definitive group to register the communications device ID of the object communications device 101 of No. 1.

### (Example of Screen Displayed on Setting Apparatus 104 or Client Device 105)

An example of a screen displayed on the setting apparatus 104 or the client device 105 will be described.

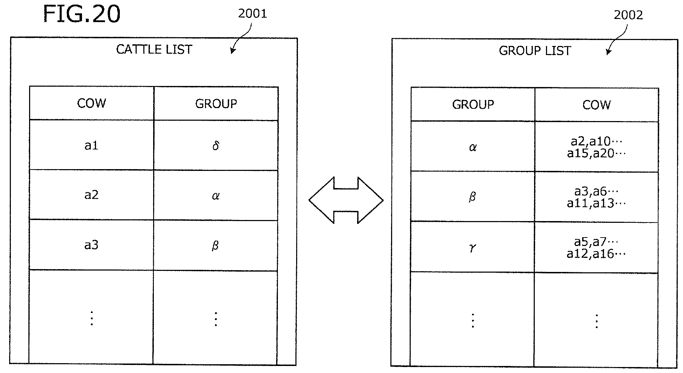

FIG. 20 is an explanatory view of an example of a screen displayed on the setting apparatus 104 or the client device 105. In the description of FIG. 20, the livestock animals A are cows. In FIG. 20, a cattle list 2001 or a group list 2002 is displayed on the display of the setting apparatus 104 or the client device 105.

The cattle list 2001 indicates which group each cow belongs to, and a worker can find a group from a cow. The group list 2002 indicates which cow belongs to each group, and a worker can find a cow from a group. The display screen is switched between the cattle list 2001 and the group list 2002 depending on input from the worker such as a button operation, for example. Such a display screen enables the worker to recognize correlation between cows and groups at a glance.

### (Communication Process Procedure of Relay Device 102)

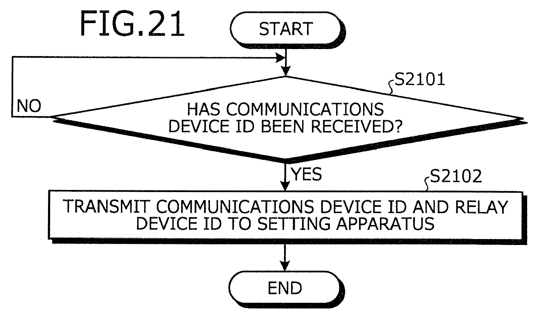

A communication process procedure of the relay device 102 will be described. FIG. 21 is a flowchart of an example of the communication process procedure of the relay device 102. In the flowchart of FIG. 21, the relay device 102 determines whether the communications device ID of the communications device 101 has been received from the communications device 101 (step S2101). The communications device ID is transmitted from the communications device 101 at intervals of one hour, for example.

The relay device 102 waits until the communications device ID has been received (step S2101: NO). When the communications device ID has been received (step S2101: YES), the relay device 102 transmits the received communications device ID and the relay device ID thereof to the setting apparatus 104 (step S2102) and terminates a series of operations of this flowchart.

As described above, when receiving the communications device ID, the relay device 102 can transmit the communications device ID along with the relay device ID thereof to the setting apparatus 104.

### (Setting Process Procedure of Setting Apparatus 104)

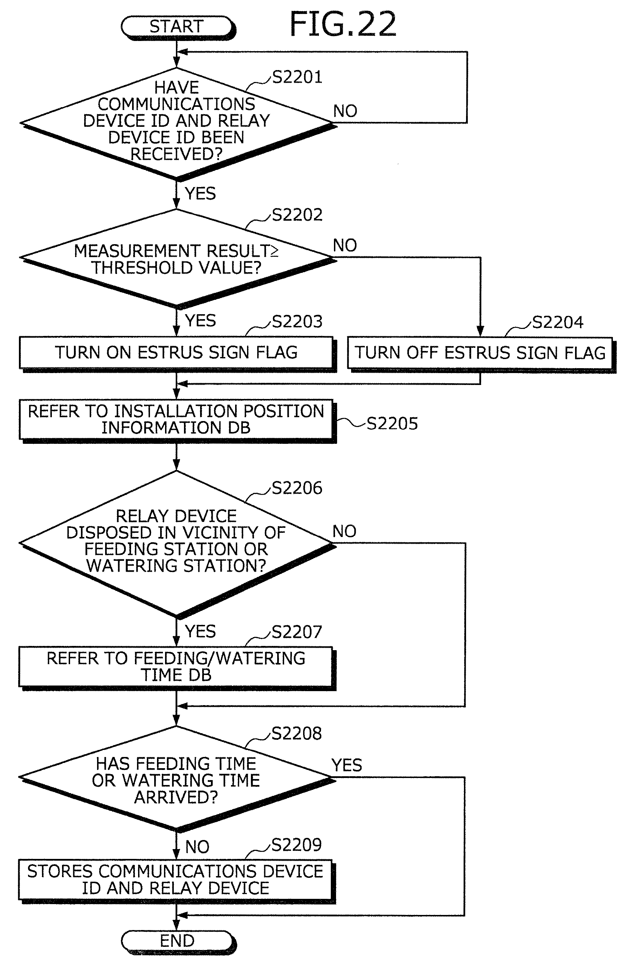

A setting process procedure of the setting apparatus 104 will be described. FIG. 22 is a flowchart (part one) of an example of the setting process procedure of the setting apparatus 104. In the flowchart of FIG. 22, the setting apparatus 104 first determines whether the communications device ID and the relay device ID have been received from the relay device 102 (step S2201). The setting apparatus 104 waits until the communications device ID and the relay device ID have been received (step S2201: NO). The communications device ID and the relay device ID are transmitted from the relay device 120 at intervals of one hour, for example.

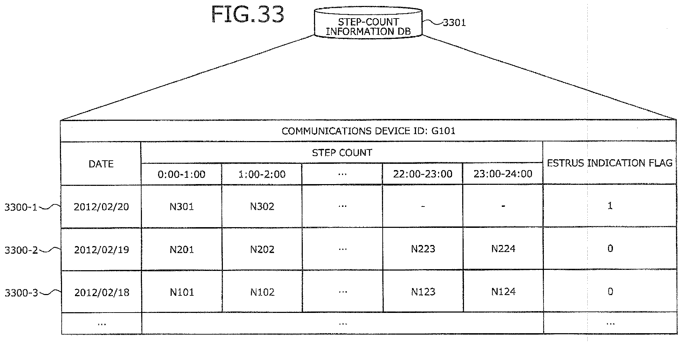

When the communications device ID and the relay device ID have been received (step S2201: YES), the setting apparatus 104 determines if a measurement result is greater than or equal to a threshold value (step S2202). A measurement result greater than or equal to the threshold value means that the number of steps taken by a livestock animal A per hour is greater than or equal to the threshold value and that the livestock animal A is in estrus. If the measurement result is greater than or equal to the threshold value (step S2202: YES), the setting apparatus 104 turns on an estrus sign flag indicative of the presence of a sign of estrus in the livestock animal A (step S2203) and transitions to the operation at step S2205. The estrus sign flag is set to ON/OFF in step-count information of a step-count information DB described later with reference to FIG. 33.

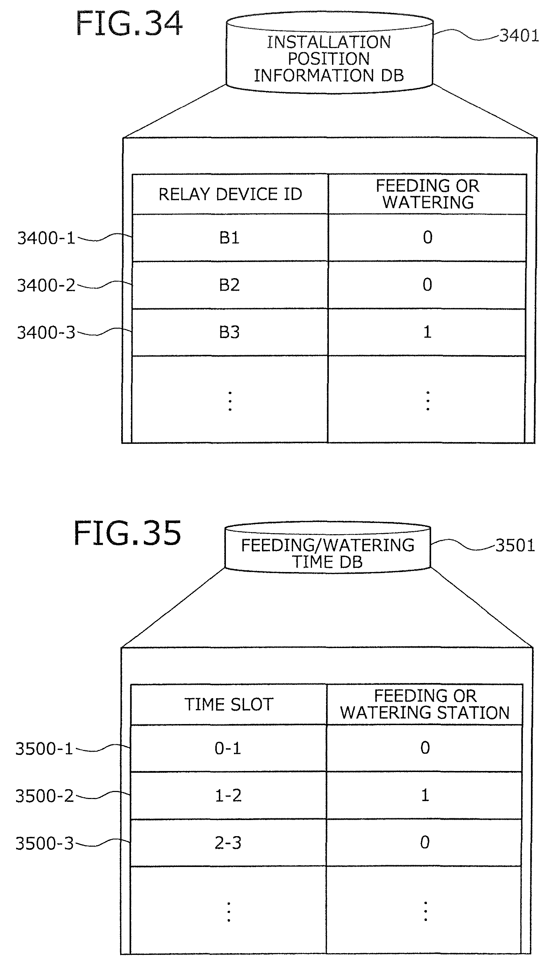

If the measurement result is less than the threshold value (step S2202: NO), the setting apparatus 104 turns off the estrus sign flag on the assumption that the livestock animal A is not in estrus (step S2204) and refers to an installation position information DB 3401 described later with reference to FIG. 34 (step S2205). The setting apparatus 104 determines whether the relay device 102 transmitting the communications device ID and the relay device ID is the relay device 102 disposed in the vicinity of a feeding station or in the vicinity of a watering station (step S2206).

If the relay device 102 is not the relay device 102 disposed in the vicinity of a feeding station or in the vicinity of a watering station (step S2206: NO), the setting apparatus 104 transitions to the operation at step S2208. If the relay device 102 is the relay device 102 disposed in the vicinity of a feeding station or in the vicinity of a watering station (step S2206: YES), the setting apparatus 104 refers to a feeding/watering time DB 3501 described later with reference to FIG. 35 (step S2207). The setting apparatus 104 determines whether the feeding time or watering time has arrived (step S2208).

If it is neither the feeding time nor watering time (step S2208: NO), the setting apparatus 104 stores the communications device ID and the relay device ID into the communications device DB 201 (see FIG. 6) (step S2209) and terminates a series of operations of this flowchart. If the feeding time or watering time has arrived (step S2208: YES), the setting apparatus 104 directly terminates a series of operations of this flowchart.

As a result, the setting apparatus 104 can store a relationship between the communications device IDs and the relay device IDs at predetermined time intervals and therefore can determine which of the communication areas 103 each of the communications device IDs is located in at predetermined time intervals.

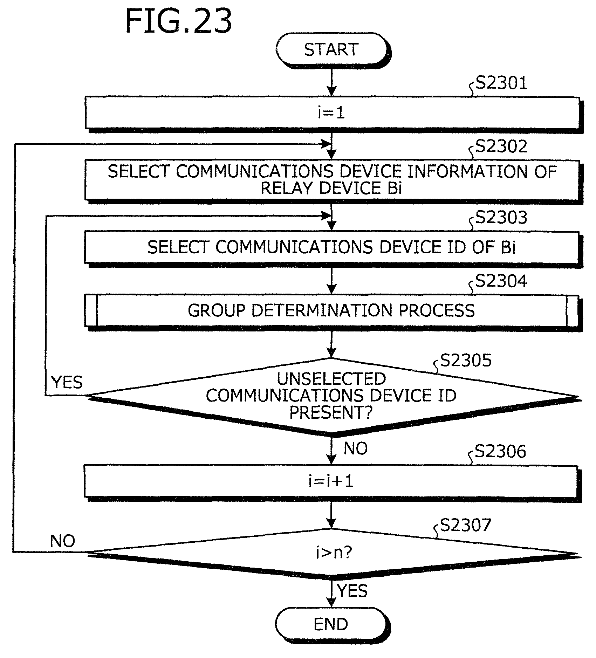

FIG. 23 is a flowchart (part two) of an example of the setting process procedure of the setting apparatus 104. In the flowchart of FIG. 23, the setting apparatus 104 sets "1" as "i" indicative of a value of "1 to n" of relay device IDs "B1" to "Bn" (step S2301). The setting apparatus 104 selects communications device information 600-i of a relay device ID "Bi" (step S2302). The communications device information 600-i includes the relay device ID and the communications device ID. The setting apparatus 104 selects the communications device ID from the communications device information 600-i of the relay device ID "Bi" (step S2303).

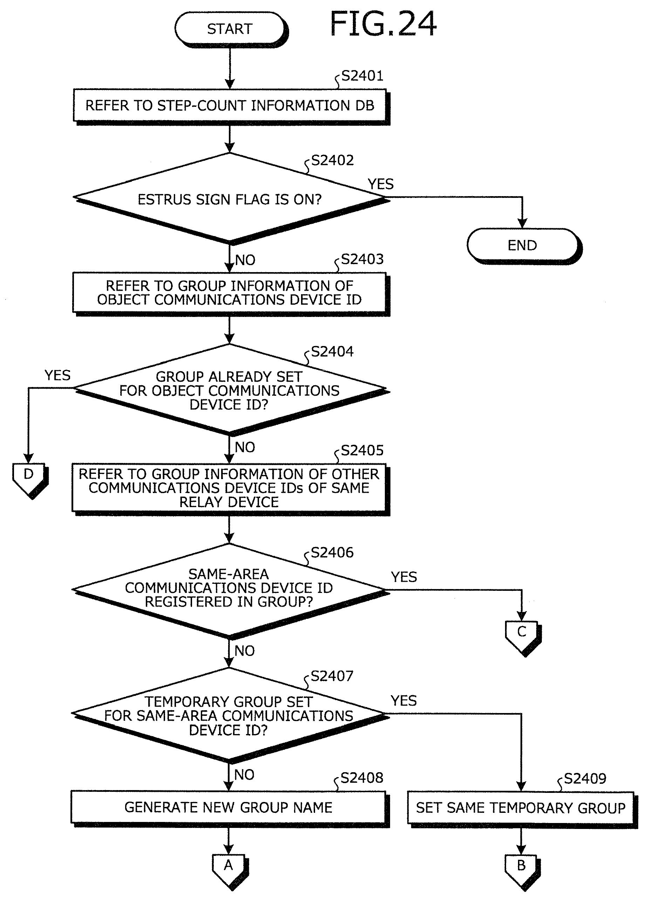

The setting apparatus 104 executes a group determination process (step S2304). Details of the group determination process will be described later with reference to FIGs. 24 to 30. The setting apparatus 104 determines whether an unselected communications device ID is present (step S2305). If an unselected communications device ID is present (step S2305: YES), the setting apparatus 104 transitions to the operation at step S2303. If no unselected communications device ID is present (step S2305: NO), the setting apparatus 104 adds "1" to "i" (step S2306).

The setting apparatus 104 determines whether "i" is greater than "n" (step S2307). If "i" is less than or equal to "n" (step S2307: NO), the setting apparatus 104 transitions to the operation at step S2302. If "i" is greater than "n" (step S2307: YES), a series of operations of this flowchart is terminated. As a result, the communications device IDs correlated with the relay devices 120 can sequentially be acquired for each of the relay devices 120 to define the object communications device ID as the determination object of the group setting.

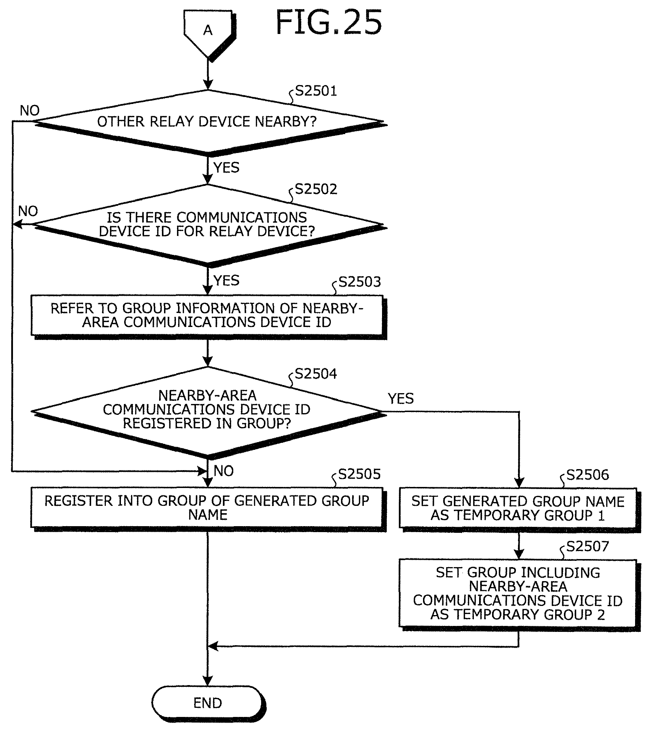

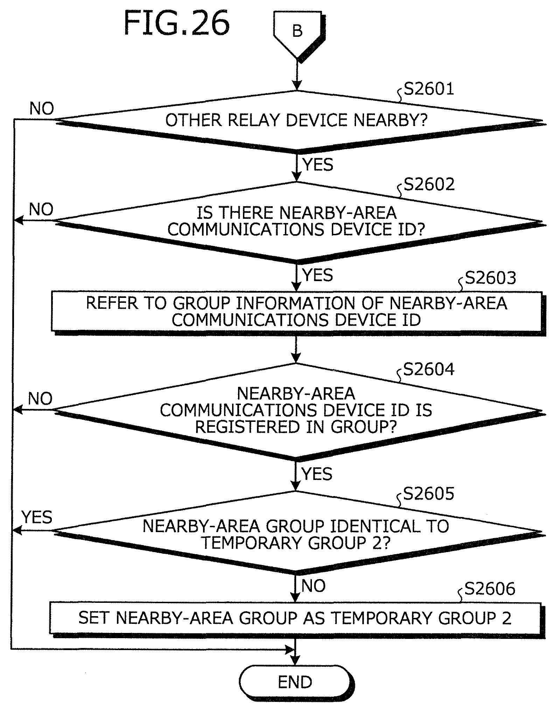

A group determination process procedure at step S2304 of FIG. 23 will be described with reference to FIGs. 24 to 30. FIG. 24 is a flowchart (part one) of an example of the group determination process procedure of the setting apparatus 104. FIG. 25 is a flowchart (part two) of the example of the group determination process procedure of the setting apparatus 104. FIG. 26 is a flowchart (part three) of the example of the group determination process procedure of the setting apparatus 104.

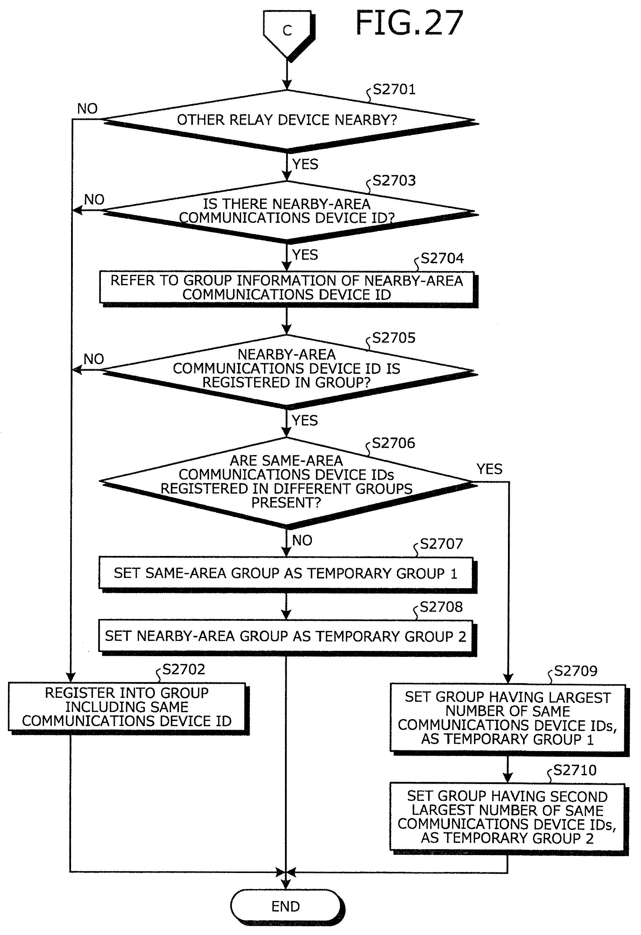

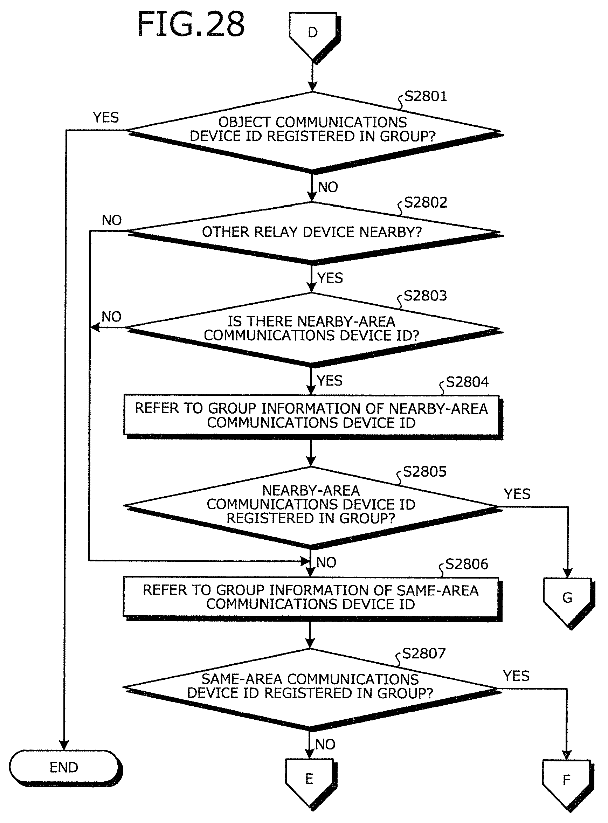

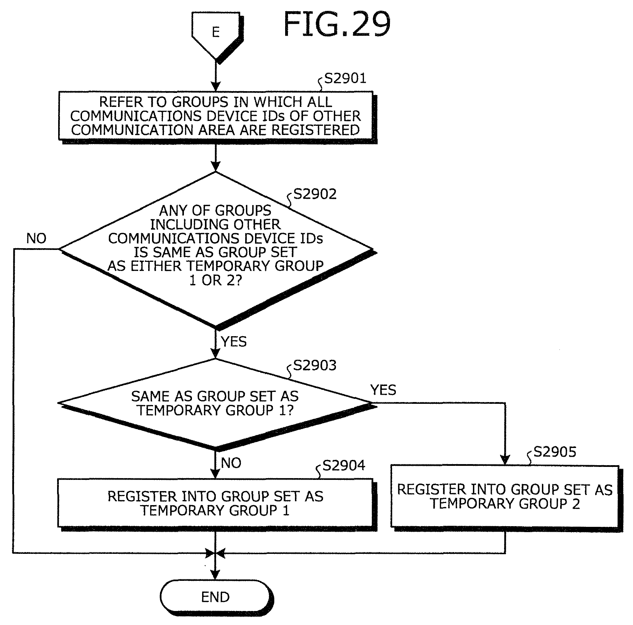

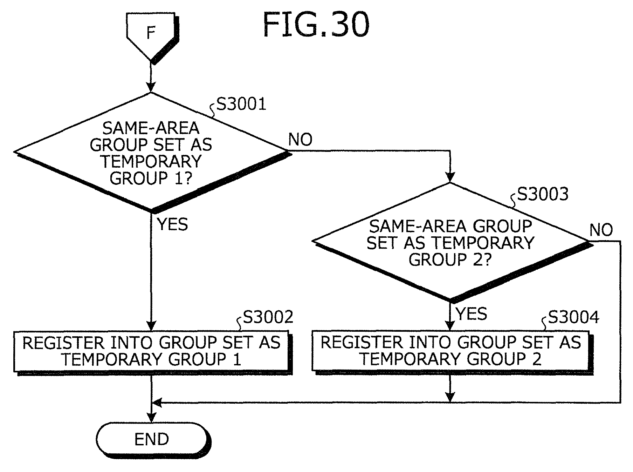

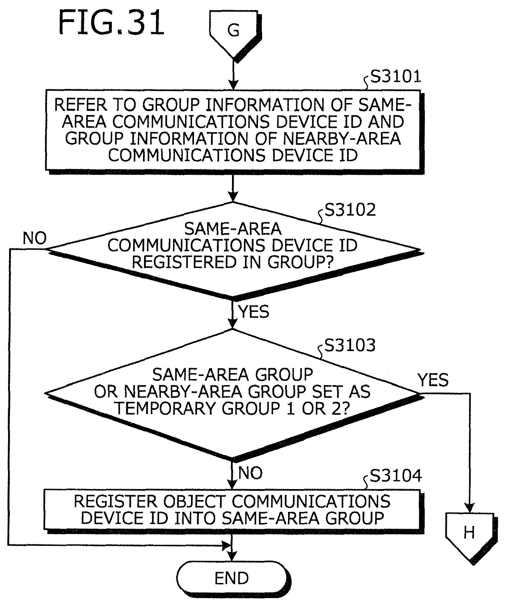

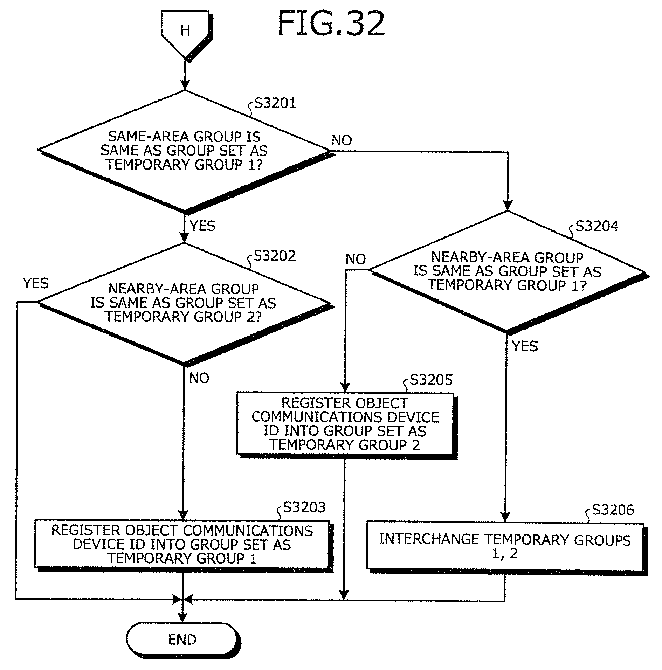

FIG. 27 is a flowchart (part four) of the example of the group determination process procedure of the setting apparatus 104. FIG. 28 is a flowchart (part five) of the example of the group determination process procedure of the setting apparatus 104. FIG. 29 is a flowchart (part six) of the example of the group determination process procedure of the setting apparatus 104. FIG. 30 is a flowchart (part seven) of the example of the group determination process procedure of the setting apparatus 104. FIG. 31 is a flowchart (part eight) of the example of the group determination process procedure of the setting apparatus 104. FIG. 32 is a flowchart (part nine) of the example of the group determination process procedure of the setting apparatus 104.

The description is based on the assumption that the setting apparatus 104 acquires the relay device ID and the communications device ID in the process depicted in FIG. 23. In the flowcharts of FIGs. 24 to 32, the setting apparatus 104 first refers to a step-count information DB 3301 described later with reference to FIG. 33 (step S2401). The setting apparatus 104 determines whether the estrus sign flag is ON (step S2402). If the estrus sign flag is ON (step S2402: YES), mixing with another herd of the livestock animals A is expected and therefore, the setting apparatus 104 terminates a series of operations of this flowchart.

If the estrus sign flag is OFF (step S2402: NO), the setting apparatus 104 refers to the group information of the object communications device ID from the group management DB 203 depicted in FIG. 8 (step S2403). The object communications device ID is the communications device ID of the communications device 101 that is an object of the group determination. The setting apparatus 104 determines whether a group is already set for the object communications device ID (step S2404). Setting of a group in this case means that temporary groups are set or that the communications device ID is already registered in a group. Registering in a group means that a definitive group is set.

The determination of step S2404 will additionally be described. For example, if the object communications device ID is included in the communications device IDs "G001 to G003" depicted in FIG. 8, a definitive group or a temporary group is set and therefore, a group is already set for the communications device ID. On the other hand, if the object communications device ID is the communications device ID "G004" depicted in FIG. 8, neither a definitive group nor a temporary group is set and therefore, a group is not yet set for the communications device ID. In the following description, the "object communications device ID" refers to the communications device ID of the communications device 101 that is the object of the group determination.

If a group is already set for the object communications device ID at step S2404 (step S2404: YES), the setting apparatus 104 transitions to the operation at step S2801 of FIG. 28. If a group is not yet set for the object communications device ID (step S2404: NO), the setting apparatus 104 refers to the group information of the other communications device IDs of the same relay device 102 (step S2405). At step S2406, the setting apparatus 104 uses the communication information of the communications device DB 201 (see FIG. 6) to acquire the other communications device IDs correlated with the relay device ID and refers to the group information of the other communications device IDs stored in the group management DB 203 (see FIG. 8).

The other communications device IDs of the same relay device 102 will hereinafter be referred to as "same-area communications device IDs". The setting apparatus 104 determines whether a same-area communications device ID is registered in a group (step S2406). In other words, it is determined at step S2406 whether a communications device ID registered in a group is included among the other communications device IDs in the same communication area 103. If a same-area communications device ID is registered in a group (step S2406: YES), the setting apparatus 104 transitions to the operation at step S2701 of FIG. 27.

If no same-area communications device ID is registered in a group (step S2406: NO), the setting apparatus 104 determines whether a temporary group is set for a same-area communications device ID (step S2407). In other words, it is determined at step S2407 whether a temporary group is set for any of the other communications device IDs in the same communication area 103.

If no temporary group is set for the same-area communications device IDs (step S2407: NO), the setting apparatus 104 generates a new group name (step S2408) and transitions to the operation at step S2501 of FIG. 25. If a temporary group is set for a same-area communications device ID (step S2407: YES), the setting apparatus 104 sets the same temporary group for the object communications device ID as the temporary group set for the same-area communications device ID (step S2409). The setting apparatus 104 transitions to the operation at step S2601 of FIG. 26.

At step S2501 of FIG. 25, the setting apparatus 104 refers to the relay device DB 202 (see FIG. 7) to determine whether another one of the relay devices 102 is present near the relay device 102 at which the object communications device ID is located (step S2501). As described, in the relay device DB 202 (see FIG. 7), for example, if "B1" is the relay device ID of the relay device 102 at which the object communications device ID is located, the relay device IDs "B2, B3" are preset as the nearby relay devices 102.

If another one of the relay devices 102 is present nearby (step S2501: YES), the setting apparatus 104 refers to the communications device DB 201 (see FIG. 6) to determine whether a communications device ID is located in the communication area 103 of the corresponding relay device 102 (step S2502). The corresponding relay device 102 is the other nearby relay device 102. A communications device ID located in the communication area 103 of the corresponding relay device 102 will hereinafter be referred to as a "nearby-area communications device ID".

If a nearby-area communications device ID is present (step S2502: YES), the setting apparatus 104 refers to the group information of the corresponding communications device ID stored in the group management DB 203 (see FIG. 8) (step S2503).

The setting apparatus 104 determines whether the nearby-area communications device ID is registered in a group (step S2504). In other words, it is determined whether a communications device ID registered in a group is present in the nearby area.

If a nearby-area communications device ID is not registered in a group (step S2504: NO), the setting apparatus 104 registers the object communications device ID into the group of the generated group name (step S2505) and terminates a series of operations of this flowchart. The group name is generated at step S2408 of FIG. 24. As a result, even when the same-area communications device ID is not registered in a group and the relay device 102 is present nearby, if the nearby-area communications device ID is not registered in a group, the object communications device ID can be registered into the new group.

If none of the other relay devices 102 is present nearby (step S2501: NO), the setting apparatus 104 transitions to step S2505. As a result, if the same-area communications device ID is not registered in a group and none of the relay devices 102 is present nearby, the object communications device ID can be registered into the new group.

If no nearby-area communications device ID is present (step S2502: NO), I the setting apparatus 104 transitions to the operation at step a result, if the same-area communications device ID is not registered in a group and no nearby-area relay device ID is located in the nearby area, the object communications device ID can be registered into the new group.

If the nearby-area communications device ID is registered in a group at step S2504 (step S2504: YES), the setting apparatus 104 sets the generated group name as the temporary group 1 (step S2506). The setting apparatus 104 sets the group including the nearby-area communications device ID as the temporary group 2 (step S2507) and terminates a series of operations of this flowchart. The group including the nearby-area communications device ID will hereinafter be referred to as a "nearby-area group".

As a result of the process after step S2504: YES, if the same-area communications device ID is not registered in a group and the already registered nearby area relay device ID is located in the nearby area, a temporary group can be set for the object communications device ID.

The group setting for the object communications device 101 depicted in FIG. 10 includes the operation at step S2501: NO → step S2505 on the flowchart. The group setting for the object communications device 101 depicted in FIG. 11 includes the operation at step S2502: NO → step S2505 in the flowchart. The group setting for the object communications device 101 depicted in FIG. 12 includes the operation at step S2504: YES → step S2506 → step S2507 on the flowchart.

Step S2601 of FIG. 26 is the process executed if a temporary group is set for the same-area communications device ID in the same communication area 103. At step S2601, the setting apparatus 104 refers to the relay device DB 202 (see FIG. 7) to determine whether another one of the relay devices 102 is present near the relay device 102 at which the object communications device ID is located (step S2601).

If none of the other relay devices 102 is present nearby (step S2601: NO), the setting apparatus 104 terminates a series of operations of this flowchart without changing a temporary group. If another one of the relay devices 102 is present nearby (step S2601: YES), the setting apparatus 104 refers to the communications device DB 201 (see FIG. 6) to determine whether a nearby-area communications device ID is located in the communication area 103 of the corresponding relay device 102 (step S2602).

If no nearby-area communications device ID is present (step S2602: NO), the setting apparatus 104 terminates a series of operations of this flowchart without changing a temporary group. If a nearby-area communications device ID is present (step S2602: YES), the setting apparatus 104 refers to the group information of the nearby-area communications device ID stored in the group management DB 203 (see FIG. 8) (step S2603).

The setting apparatus 104 determines whether the nearby-area communications device ID is registered in a group (step S2604). In other words, it is determined whether a communications device 101 having a communications device ID registered in a group is present in the nearby area. If the nearby-area communications device ID is not registered in a group (step S2604: NO), the setting apparatus 104 terminates a series of operations of this flowchart without changing a temporary group. If the nearby-area communications device ID is registered in a group (step S2604: YES), the setting apparatus 104 determines whether the nearby-area group is identical to the temporary group 2 set for the object communications device ID (step S2605).

When the nearby-area group is identical to the set temporary group 2, this particularly means that if the group β is set as the temporary group 2 of the same-area communications device ID, the same group β is located in the nearby area of the object communications device ID. This means that no change is made in the positional relationship between the same-area communications device ID and the nearby-area group and the positional relationship between the object communications device ID and the nearby-area group at the time of setting of the temporary group 2 for the same-area communications device ID.

If the nearby-area group is identical to the temporary group 2 set for the object communications device ID (step S2605: YES), the setting apparatus 104 terminates a series of operations of this flowchart without changing a temporary group.

If the nearby-area group is not identical to the temporary group 2 set for the object communications device ID (step S2605: NO), the setting apparatus 104 sets the nearby-area group as the temporary group 2 (step S2606). The setting apparatus 104 terminates a series of operations of this flowchart. When the nearby-area group is not identical to the temporary group 2 set for the object communications device ID, this particularly means that if the group β is set as the temporary group 2 of the same-area communications device ID, the group γ is located in the nearby area of the object communications device ID.

As a result, if the temporary group is set for the same-area communications device ID in the same communication area 103, the temporary group can also be set for the object communications device ID. The group set as the temporary group 2 of the object communications device ID can be reset as needed.

Step S2701 of FIG. 27 is the process executed if no temporary group is set for the object communications device ID or the object communications device ID is not registered in a group while a same-area communications device ID registered in a group is present. At step S2701, the setting apparatus 104 refers to the relay device DB 202 (see FIG. 7) to determine whether another one of the relay devices 102 is present near the relay device 102 at which the object communications device ID is located (step S2701).

If none of the other relay devices 102 is present nearby (step S2701: NO), the setting apparatus 104 registers the object communications device ID into the group including the same-area communications device ID (step S2702) and terminates a series of operations of this flowchart. As a result, if a same-area communications device ID registered in a group is present and none of the other relay devices 102 is present nearby, the object communications device ID can be registered into the same group. A group including the same-area communications device ID will hereinafter be referred to as a "same-area group".

If another one of the relay devices 102 is present nearby (step S2701: YES), the setting apparatus 104 refers to the communications device DB 201 (see FIG. 6) to determine whether a nearby-area communications device ID is located in the communication area 103 of the corresponding relay device 102 (step S2703).

If no nearby-area communications device ID is present (step S2703: NO), the setting apparatus 104 transitions to the operation at step S2702. As a result, if a same-area communications device ID registered in a group is present and no nearby-area communications device ID is located in the nearby area, the object communications device ID can be registered in the same group as the same-area communications device ID.

If a nearby-area communications device ID is present (step S2703: YES), the setting apparatus 104 refers to the group information of the nearby-area communications device ID stored in the group management DB 203 (see FIG. 8) (step S2704). The setting apparatus 104 determines whether the nearby-area communications device ID is registered in a group (step S2705). In other words, it is determined whether a communications device 101 having a communications device ID registered in a group is present in the nearby area.

If the nearby-area communications device ID is not registered in a group (step S2705: NO), the setting apparatus 104 transitions to the operation at step S2702. As a result, if a same-area communications device ID registered in a group is present and no nearby-area communications device ID registered in a group is located in the nearby area, the object communications device ID can be registered in the same group as the same-area communications device ID.

If the nearby-area communications device ID is registered in a group (step S2705: YES), the setting apparatus 104 determines whether same-area communications device IDs registered in different groups are present (step S2706). When same-area communications device ID registered in different groups exist, this means that multiple groups are located in the communication area 103 in which the object communications device ID is located. The absence of same-area communications device IDs registered in different groups means that only one group is located in the communication area 103 in which the object communications device ID is located.

If same-area communications device IDs registered in different groups are not present (step S2706: NO), the setting apparatus 104 sets the same-area group, i.e., the group including the same-area communications device ID, as the temporary group 1 (step S2707). The setting apparatus 104 sets the nearby-area group, i.e., the group including the nearby-area communications device ID, as the temporary group 2 (step S2708) and terminates a series of operations of this flowchart.

As a result, if the same-area communications device ID and the nearby-area communications device ID registered in groups exist, the group including the same-area communications device ID can be set as the temporary group 1 and the group including the nearby-area communications device ID can be set as the temporary group 2.

If same-area communications device IDs registered in different groups are present at step S2706 (step S2706: YES), the setting apparatus 104 sets the group having the largest number of the same communications device IDs as the temporary group 1 (step S2709). The setting apparatus 104 sets the group having the second largest number of the same communications device IDs as the temporary group 2 (step S2710) and terminates a series of operations of this flowchart.

As a result, if same-area communications device IDs in different groups exist, the group having the largest number of the same communications device IDs can be set as the temporary group 1 and the group having the second largest number of the same communications device IDs can be set as the temporary group 2.

The group setting for the object communications device 101 depicted in FIG. 13 includes the operation at step S2706: NO → step S2707 → step S2708 on the flowchart. The group setting for the object communications device 101 depicted in FIG. 14 includes the operation at step S2706: YES → step S2709 → step S2710 on the flowchart.

Step S2801 of FIG. 28 is the process executed if the temporary groups are set for the object communications device ID or the object communications device ID is registered in a group. At step S2801, the setting apparatus 104 determines whether the object communications device ID is registered in a group (step S2801). If the object communications device ID is registered in a group (step S2801: YES), the setting apparatus 104 terminates a series of operations of this flowchart.

If the object communications device ID is not registered in a group (step S2801: NO), i.e., if the temporary groups are set for the object communications device ID, the setting apparatus 104 refers to the relay device DB 202 (see FIG. 7) to determine whether another one of the relay devices 102 is present near the relay device 102 at which the object communications device ID is located (step S2802).

If none of the other relay devices 102 is present nearby (step S2802: NO), the setting apparatus 104 transitions to the operation at step S2806. If another one of the relay devices 102 is present nearby (step S2802: YES), the setting apparatus 104 refers to the communications device DB 201 (see FIG. 6) to determine whether a nearby-area communications device ID is located in the communication area 103 of the corresponding relay device 102 (step S2803).

If no nearby-area communications device ID is present (step S2803: NO), the setting apparatus 104 transitions to the operation at step S2806. If a nearby-area communications device ID is present (step S2803: YES), the setting apparatus 104 refers to the group information of the nearby-area communications device ID stored in the group management DB 203 (see FIG. 8) (step S2804).

The setting apparatus 104 determines whether the nearby-area communications device ID is registered in a group (step S2805). In other words, it is determined whether a communications device having a communications device ID registered in a group is present in the nearby communication area 103 of the object communications device ID.

If the nearby-area communications device ID is registered in a group (step S2805: YES), the setting apparatus 104 transitions to the operation at step S3101 of FIG. 31. If the nearby-area communications device ID is not registered in a group (step S2805: NO), the setting apparatus 104 refers to the group information of the same-area communications device ID stored in the group management DB 203 (see FIG. 8) (step S2806).

The setting apparatus 104 determines whether the same-area communications device ID is registered in a group (step S2807). If the same-area communications device ID is registered in a group (step S2807: YES), the setting apparatus 104 transitions to the operation at step S3001 of FIG. 30. If the same-area communications device ID is not registered in a group (step S2807: NO), the setting apparatus 104 transitions to the operation at step S2901 of FIG. 29.

At step S2901 of FIG. 29, the setting apparatus 104 refers to groups in which all the communications device IDs of the other communication area 103 are registered (step S2901). The groups with all the communications device IDs registered therein are stored in the group management DB 203 (see FIG. 8).

The setting apparatus 104 determines whether any of the groups including the other communications device IDs is the same as the group set as either the temporary group 1 or 2 (step S2902). If none of the groups including the other communications device IDs is the same as the group set as either the temporary group 1 or 2 (step S2902: NO), the setting apparatus 104 terminates a series of operations of this flowchart without changing the temporary group. When none of the groups including the other communications device IDs is the same as the group set as either the temporary group 1 or 2, this means that none of the groups set as the temporary groups 1 and 2 is set as the definitive group for another communications device ID.

If any of the groups including the other communications device IDs is the same as the group set as either the temporary group 1 or 2 (step S2902: YES), the setting apparatus 104 determines whether the group is the same as the group set as the temporary group 1 (step S2903). When any of the groups including the other communications device IDs is the same as the group set as either the temporary group 1 or 2, this means that the same group is used for another group and is not registered as the definitive group of the object communications device ID.

If the group is not the same as the group set as the temporary group 1 (step S2903: NO), the setting apparatus 104 registers the object communications device ID into the group set as the temporary group 1 (step S2904) and terminates a series of operations of this flowchart. If the group is the same as the group set as the temporary group 1 (step S2903: YES), the setting apparatus 104 registers the object communications device ID into the group set as the temporary group 2 (step S2905) and terminates a series of operations of this flowchart.

As a result, out of the groups set as the temporary groups 1 and 2, the group having another communications device ID registered therein can be excluded from the temporary groups 1 and 2. Therefore, the object communications device ID can be registered into the group different from the group having another communications device ID registered therein.

Step S3001 of FIG. 30 is the process executed if a nearby area or a nearby-area communications device ID is not present and the temporary groups are set for the object communications device ID while a same-area communications device ID is registered in a group. At step S3001, the setting apparatus 104 determines whether the same-area group is set as the temporary group 1 of the object communications device ID (step S3001).

If the same-area group is set as the temporary group 1 of the object communications device ID (step S3001: YES), the setting apparatus 104 registers the object communications device ID into the same-area group set as the temporary group 1 (step S3002). The setting apparatus 104 terminates a series of operations of this flowchart.

If the same-area group is not set as the temporary group 1 of the object communications device ID (step S3001: NO), the setting apparatus 104 determines whether the same-area group is set as the temporary group 2 of the object communications device ID (step S3003). If the same-area group is not set as the temporary group 2 of the object communications device ID (step S3003: NO), the setting apparatus 104 terminates a series of operations of this flowchart.

If the same-area group is set as the temporary group 2 of the object communications device ID (step S3003: YES), the setting apparatus 104 registers the object communications device ID into the same-area group set as the temporary group 2 (step S3004). As a result, the object communications device ID can be registered into the group same as the group including the same-area communications device ID. The group setting for the object communications device 101 depicted in FIG. 19 includes the operation at step S3001: YES → step S3002 on the flowchart.

Step S3101 of FIG. 31 is the process executed if the temporary groups are set for the object communications device ID and a nearby-area communications device ID registered in a group is present. At step S3101, the setting apparatus 104 refers to the group information of the same-area communications device ID and the group information of the nearby-area communications device ID recorded in the group management DB 203 (step S3101).

The setting apparatus 104 determines whether the same-area communications device ID is registered in a group (step S3102). If the same-area communications device ID is not registered in a group (step S3102: NO), the setting apparatus 104 retains the temporary groups without change and terminates a series of operations of this flowchart.

If the same-area communications device ID is registered in a group (step S3102: YES), the setting apparatus 104 determines whether the same-area group or the nearby-area group is set as either the temporary group 1 or 2 (step S3103).

When the same-area group or the nearby-area group is not set as either the temporary group 1 or 2, the setting of the temporary groups 1 and 2 may be incorrect from the start, for example. Alternatively, this may be the case of a so-called stray cow, or particularly, the communications device 101 of the object communications device ID was accidentally located in a herd different from an original herd at the time of setting of the temporary groups 1 and 2.

If the same-area group or the nearby-area group is set as either the temporary group 1 or 2 (step S3103: YES), the setting apparatus 104 transitions to the process of the step S3201 of FIG. 32. If the same-area group or the nearby-area group is not set as either the temporary group 1 or 2 (step S3103: NO), the setting apparatus 104 registers the object communications device ID into the same-area group (step S3104). The setting apparatus 104 terminates a series of operations of this flowchart. As a result, in the case of the incorrect setting of the temporary groups 1 and 2 or in the case of a stray cow, the object communications device ID can be registered into a group including another communications device ID located in the same communication area 103 at the current time point.

At step S3201 of FIG. 32, the setting apparatus 104 determines whether the same-area group is the same as the group set as the temporary group 1 (step S3201). When the same-area group is the same as the group set as the temporary group 1, this means that the positional relationship between the group set as the temporary group 1 and the object communications device ID is not changed and therefore, both are located in the same communication area 103.

If the same-area group is the same as the group set as the temporary group 1 (step S3201: YES), the setting apparatus 104 determines whether the nearby-area group is the same as the group set as the temporary group 2 (step S3202). When the nearby-area group is the same as the group set as the temporary group 2, this means that the positional relationship between the group set as the temporary group 2 and the object communications device ID is not changed and therefore, both are located in the nearby different communication areas 103.

If the nearby-area group is the same as the group set as the temporary group 2 (step S3202: YES), the setting apparatus 104 terminates a series of operations of this flowchart. The process of step S3201: YES → step S3202: YES corresponds to that the positional relationship of the group of the temporary group 1, the group of the temporary group 2, and the object communications device ID is not changed after setting the temporary groups.

If the nearby-area group is different from the group set as the temporary group 2 (step S3202: NO), the setting apparatus 104 registers the object communications device ID into the group set as the temporary group 1 (step S3203). The setting apparatus 104 terminates a series of operations of this flowchart. When the nearby-area group is different from the group set as the temporary group 2, this means that the group of the temporary group 2 is not present in the nearby area of the object communications device ID and it is revealed that the object communications device ID does not belong to the group of the temporary group 2. As a result, if it is revealed that the object communications device ID does not belong to the group of the temporary group 2, the object communications device ID can be registered into the temporary group 1.

If the same-area group is different from the group set as the temporary group 1 (step S3201: NO), the setting apparatus 104 determines whether the nearby-area group is the same as the group set as the temporary group 1 (step S3204). If the nearby-area group is different from the group set as the temporary group 1 (step S3204: NO), the setting apparatus 104 registers the object communications device ID into the group set as the temporary group 2 (step S3205).

When the nearby-area group is different from the group set as the temporary group 1, this means that the group of the temporary group 1 is not present in the nearby area of the object communications device ID and it is revealed that the object communications device ID does not belong to the group of the temporary group 1. As a result, if it is revealed that the object communications device ID does not belong to the group of the temporary group 1, the object communications device ID can be registered into the temporary group 2.

If the nearby-area group is the same as the group set as the temporary group 1 (step S3204: YES), the setting apparatus 104 interchanges the temporary groups 1, 2 (step S3206) and terminates a series of operations of this flowchart.

The process of step S3201: NO → step S3204: YES corresponds to that the group of the temporary group 2 and the object communications device ID are located in the same communication area 103 while the group of the temporary group 1 is located in the nearby area of the object communications device ID. Therefore, this corresponds to the group of the temporary group 1 and the group of the temporary group 2 being interchanged after setting the temporary groups.

The group setting for the object communications device 101 depicted in FIG. 15 includes the operation at step S3201: YES → step S3202: YES on the flowchart. The group setting for the object communications device 101 depicted in FIG. 16 includes the operation at step S3204: YES → step S3206 on the flowchart. The group setting for the object communications device 101 depicted in FIG. 17 includes the operation at step S3202: NO → step S3203 on the flowchart. The group setting for the object communications device 101 depicted in FIG. 18 includes the operation at step S3204: NO → step S3205 on the flowchart.

For example, the group determination process may be executed even after registration into a group. For example, the communications device IDs already registered in groups may sequentially be selected to execute the group determination process. As a result, if a communications device ID is registered in a wrong group, the communications device ID can be reregistered and the accuracy of group management can be improved.

If the group registration of the communications device IDs is completed, the setting apparatus 104 transmits information indicative of the completion of the group registration to the client device 105. The client device 105 display and output the groups including the communications device IDs.

The setting apparatus 104 may correlate the client devices 105 with the communications device IDs in advance and, if a communications device ID is registered into a group, the setting apparatus 104 may notified the client device 105 correlated with the corresponding communications device ID of the information indicative of the completion of the group registration of the corresponding communications device ID. As a result, in the case of joint management in which respective livestock animals A have different workers even in the same farm F, each worker can know the herd including the livestock animal A managed by the worker.

### (Example of Storage Contents of Step Count Information DB 3301)

An example of storage contents of the step count information DB 3301 stored in the setting apparatus 104 will be described with reference to FIG. 33. FIG. 33 is an explanatory view of an example of storage contents of the step count information DB 3301. In FIG. 33, the step count information DB 3301 is stored for each communications device ID. The step count information DB 3301 has a data field, a step count field for each time slot, and an estrus sign flag field. By setting information in these fields, records of step-count information 3300-1 to 3300-3 are stored as a record for each combination of dates, step count histories, and estrus sign flags in the step count information DB 3301.

The date indicates a date, e.g., year/month/day, of measurement of the step count. The step count indicates the number of steps taken by the livestock animal A based on the measurement result information. The step count field includes fields of respective time slots such as "0:00-1:00", "1:00-2:00", "2:00-3:00", ..., "22:00-23:00", and "23:00-24:00", for example. The step count field stores information indicative of the number of steps taken by the livestock animal A in each time slot. For example, the setting apparatus 104 stores a value acquired by subtracting a measurement value at the starting time from a measurement value at the ending time of each of the times as the number of steps taken by the livestock animal A into the step count field.

For example, it is assumed that the estrus notification device 102 acquires the measurement result information including information indicating that the measurement value at "2:00 on February 20, 2012" is "C2" and that the immediately preceding measurement value at "1:00 on February 20, 2012" is "C1". In this case, the estrus notification device 102 stores "N302 (=C2-C1)" acquired by subtracting "C1" from "C2" in the step count field identified by a date of "February 20, 2012" and a time of "two o'clock".

The estrus sign flag field stores each estrus sign flag as "0" indicative of OFF or "1" indicative of ON, for example. For example, the estrus notification device 102 stores "1" in the estrus sign flag field if the number of steps acquired as a measurement result is greater than or equal to a predetermined threshold value. The setting of the estrus sign flag will be described later with reference to FIG. 18.

For example, the step count information 3300-1 has "N301" stored in the field of "0:00-1:00" and "N302" stored in the field of "1:00-2:00" as well as "1" stored in the estrus sign flag field since "N302" is greater than or equal to the threshold value, for example. The step count information is stored in the step count information DB 3301 for a predetermined period such as three months, for example.

### (Example of Storage Contents of Installation Position Information DB 3401)

An example of storage contents of the installation position information DB 3401 stored in the setting apparatus 104 will be described with reference to FIG. 34. FIG. 34 is an explanatory view of an example of storage contents of the installation position information DB 3401. In FIG. 34, the installation position information DB 3401 has a relay device ID field and a feeding or watering station field. By setting information in these fields, records of installation position information 3400-1 to 3400-3 are stored as a record for each combination of relay device IDs and feeding or watering stations in the installation position information DB 3401.

The relay device ID field stores a relay device ID for identifying the relay device 102. The feeding or watering station field stores identification information of "0" or "1". The absence of a feeding or watering station near the relay device 102 is indicated by "0" while the presence of a feeding or watering station near the relay device 102 is indicated by "1". For example, in FIG. 34, the installation position information 3400-2 indicates that a feeding or watering station exists near the relay device 102 of the relay device ID "B2".

### (Example of Storage Contents of Feeding/Watering Time DB 3501)

An example of storage contents of the feeding/watering time DB 3501 stored in the setting apparatus 104 will be described with reference to FIG. 35. FIG. 35 is an explanatory view of an example of storage contents of the feeding/watering time DB 3501. In FIG. 35, the feeding/watering time DB 3501 has a time slot field and a feeding or watering field. By setting information in these fields, records of feeding/watering information 3500-1 to 3500-3 are stored as a record for each combination of time slots and feeding or watering in the feeding/watering time DB 3501.

The time slot field is a field indicative of a time slot such as "0:00-1:00", "1:00-2:00", "2:00-3:00", ..., for example. The feeding or watering field stores "0" or "1". The absence of feeding and watering is indicated by "0" while the presence of feeding and watering is indicated by "1". For example, in FIG. 35, the feeding/watering information 3500-3 indicates that feeding and watering are performed in the time slot of 2:00-3:00.

As described above, according to the setting apparatus 104 of the embodiment, when the nearby area is not present, the object communications device ID can be registered into a unique group without another group registration. Therefore, the object communications device ID can be registered into a new group. As a result, the workload required for comprehending herds can be reduced.

According to the setting apparatus 104 of the embodiment, when a same-communication-area communications device ID is registered in a group and no nearby area exists, the object communications device ID can be registered into the same group as the same-communication-area communications device ID. Therefore, the object communications device ID can be registered into a new uniquely set group. As a result, the workload required for comprehending herds can be reduced.

According to the setting apparatus 104 of the embodiment, when a same-communication-area communications device ID is registered in a group and no nearby-area communications device ID is present, the object communications device ID can be registered into the same group as the same-communication-area communications device ID. Therefore, the object communications device ID can be registered into a new uniquely set group. As a result, the workload required for comprehending herds can be reduced.

According to the setting apparatus 104 of the embodiment, when a same-communication-area communications device ID is registered in a group and a nearby-area communications device ID is present, the groups can be set as the temporary groups of the object communications device ID.

According to the setting apparatus 104 of the embodiment, when a same-communication-area communications device ID is not registered in a group and no nearby-area communications device ID is present, the object communications device ID can be registered into a new uniquely set group. As a result, the workload required for comprehending herds can be reduced.

According to the setting apparatus 104 of the embodiment, when a same-communication-area communications device ID is not registered in a group and the nearby-area communications device ID is present, a new group or the group of the nearby area can be set as a temporary group of the object communications device ID.

According to the setting apparatus 104 of the embodiment, when no nearby area exists or no nearby-area communications device ID is present, the object communications device ID can be registered into the same group as the same-communication-area communications device ID out of the temporary groups 1, 2. Therefore, the object communications device ID having the temporary groups 1, 2 set can be registered into the same group as the other communications device IDs in the same communication area 103. As a result, the workload required for comprehending herds can be reduced.

According to the setting apparatus 104 of the embodiment, the object communications device ID can be registered into the other group that is not the one same as the group set as either the temporary group 1 or 2 and included in all the groups in which the communications device IDs are registered. Therefore, the object communications device ID can be registered into one of the groups set as the temporary groups by excluding the groups including the other communications device IDs. As a result, the workload required for comprehending herds can be reduced.

The setting method described in the present embodiment may be implemented by executing a prepared program on a computer such as a personal computer and a workstation. The program is stored on a computer-readable recording medium such as a hard disk, a flexible disk, a CD-ROM, an MO, and a DVD, read out from the computer-readable medium, and executed by the computer. The program may be distributed through a network such as the Internet.

### EXPLANATIONS OF LETTERS OR NUMERALS

- 101: communications device
- 102: relay device
- 104: setting apparatus
- 105: client apparatus
- 201: communications device DB
- 202: relay device DB
- 1101: acquiring unit
- 1102: first determining unit
- 1103: storage unit
- 1104: second determining unit
- 1105: setting unit
- 1106: group storage unit
- 1107: third determining unit
- 1108: fourth determining unit
- 3301: step count information DB
- 3401: installation position information DB
- 3501: feeding/watering time DB

## Claims

1. A setting method executed by a computer, the setting method comprising:
acquiring identification information of an object communications device (101) attached to a livestock animal in a livestock animal group located in a communication area (103a) of any one of multiple relay devices (102a, 102b, 102c) disposed at different positions;
determining whether a first group is set that includes identification information of a communications device (101) attached to another livestock animal different from the livestock animal and among the livestock animal group;
referring to a storage unit (202) storing combinations of relay devices among the multiple relay devices (102a, 102b, 102c) and having an inter-relay device distance less than or equal to a predetermined value, and determining whether another relay device (102b) is present whose distance from the relay device (102a) less than or equal to the predetermined value; and
setting a second group including the identification information of the object communications device (101) if the first group is not set and the other relay device (102b) is not present.

2. The setting method according to claim 1, further comprising
registering the identification information of the object communications device (101) into the first group if the first group is set and the other relay device (102b) is not present.

3. The setting method according to claim 2, further comprising
determining whether a third group is set that includes identification of a communications device (101) attached to a livestock animal located in a communication area (103b) of the other relay device (102b), if the first group is set and the other relay device (102b) is present, wherein
the registering includes registering the identification information of the object communications device (101) into the first group if the third group is not set.

4. The setting method according to claim 3, wherein
the setting includes setting the first group and the third group as group candidates that include the identification information of the object communications device (101), if the third group is set.

5. The setting method according to any one of claims 1 to 4, wherein
the determining includes determining whether a third group is set that includes identification information of a communications device (101) attached to a livestock animal located in a communication area (103b) of the other relay device (102b), if the first group is not set and the other relay device (102b) is present, and
the registering includes registering the identification information of the object communications device (101) into the second group, if the third group is not set.

6. The setting method according to claim 5, wherein
the setting includes setting the second group and the third group as group candidates that include the identification information of the object communications device (101), if the third group is set.

7. The setting method according to claim 4 or 6, further comprising
acquiring the identification information of the object communications device (101) attached to the livestock animal located in a communication area (103a) of any one of the multiple relay devices (102a, 102b, 102c) after the group candidates are set, and
registering the identification information of the object communications device (101) into a group including identification information of a communications device (101) attached to another livestock animal located in the communication area (103a) of the relay device (102a) among the group candidates.

8. The setting method according to any one of claims 4, 6, and 7, wherein
the determining includes determining whether any one of the group candidates is included in groups in which identification information of communications devices (101) is registered,
the communications devices (101) are attached to livestock animals located in communication areas (103b) of the other relay devices (102b) different from the relay device (102a), and
the registering includes, if any one of the group candidates is included, registering the identification information of the object communications device (101) into the other group of the group candidate that is not included.

9. The setting method according to any one of claims 1 to 8, further comprising
determining whether a group is set that includes the identification information of the object communications device (101), if the identification information of the object communications device (101) is acquired, wherein
the determining of whether the first group is set includes determining whether the first group is set that includes identification information of a communications device (101) attached to the other livestock animal if the group is not set, and
the determining of whether the other relay device (101) is present includes referring to the storage unit (202) and determining whether another relay device (102b) is present whose distance from the relay device (102a) is less than or equal to the predetermined value if the group is not set.

10. A setting program that causes a computer to execute a process comprising:
acquiring identification information of an object communications device (101) attached to a livestock animal in a livestock animal group located in a communication area (103a) of any one of multiple relay devices (102a, 102b, 102c) disposed at different positions;
determining whether a first group is set that includes identification information of a communications device (101) attached to another livestock animal different from the livestock animal and among the livestock animal group;
referring to a storage unit (202) storing combinations of relay devices among the multiple relay devices (102a, 102b, 102c) and having an inter-relay device distance less than or equal to a predetermined value, and determining whether another relay device (102b) is present whose distance from the relay device (102a) is less than or equal to the predetermined value; and
setting a second group including the identification information of the object communications device (101) if the first group is not set and the other relay device (102b) is not present.

11. A setting apparatus (104) comprising:
an acquiring unit (1101) that acquires identification information of an object communications device attached to a livestock animal in a livestock animal group located in a communication area of any one of multiple relay devices disposed at different positions;
a first determining unit (1102) that determines whether a first group is set that includes identification information of a communications device attached to another livestock animal different from the livestock animal and among the livestock animal group;
a second determining unit (1104) that refers to a storage unit storing combinations of relay devices among the multiple relay devices and having an inter-relay device distance less than or equal to a predetermined value, and determines whether another relay device is present whose distance from the relay device less than or equal to the predetermined value; and
a setting unit (1105) that sets a second group including the identification information of the object communications device, if the first group is determined by the first determining unit (1102) to not be set and the other relay device is determined by the second determining unit (1104) to not be present.

## Patentansprüche

1. Ein Einstellverfahren, ausgeführt durch einen Computer, wobei das Einstellverfahren umfasst:
Erfassen einer Identifikationsinformation einer Zielkommunikationsvorrichtung (101), welche an einem Nutztier in einer Nutztiergruppe angebracht ist, welche sich in einem Kommunikationsbereich (103a) von einer von an unterschiedlichen Positionen angeordneten mehreren Relaisvorrichtungen (102a, 102b, 102c) befindet;
Bestimmen, ob eine erste Gruppe eingestellt ist, welche eine Identifikationsinformation einer Kommunikationsvorrichtung (101) umfasst, welche an einem zu dem Nutztier unterschiedlichen anderen Nutztier aus der Nutztiergruppe angebracht ist;
Bezugnehmen auf eine Speichereinheit (202), welche Kombinationen von Relaisvorrichtungen aus den mehreren Relaisvorrichtungen (102a, 102b, 102c) speichert, welche einen Zwischenrelaisvorrichtungsabstand kleiner oder gleich einem vorbestimmten Wert aufweisen, und Bestimmen, ob eine andere Relaisvorrichtung (102b) vorhanden ist, deren Abstand von der Relaisvorrichtung (102a) kleiner oder gleich dem vorbestimmten Wert ist; und
Einstellen einer zweiten Gruppe, welche die Identifikationsinformation der Zielkommunikationsvorrichtung (101) umfasst, falls die erste Gruppe nicht eingestellt ist und die andere Relaisvorrichtung (102b) nicht vorhanden ist.

2. Einstellverfahren gemäß Anspruch 1, weiter umfassend Registrieren der Identifikationsinformation der Zielkommunikationsvorrichtung (101) in der ersten Gruppe, falls die erste Gruppe eingestellt ist und die andere Relaisvorrichtung (102b) nicht vorhanden ist.

3. Einstellverfahren gemäß Anspruch 2, weiter umfassend Bestimmen, ob eine dritte Gruppe eingestellt ist, welche eine Identifikation einer Kommunikationsvorrichtung (101) umfasst, welche an einem Nutztier angebracht ist, welches sich in einem Kommunikationsbereich (103b) der anderen Relaisvorrichtung (102b) befindet, falls die erste Gruppe eingestellt ist und die andere Relaisvorrichtung (102b) vorhanden ist, wobei
das Registrieren ein Registrieren der Identifikationsinformation der Zielkommunikationsvorrichtung (101) in der ersten Gruppe umfasst, falls die dritte Gruppe nicht eingestellt ist.

4. Einstellverfahren gemäß Anspruch 3, wobei
das Einstellen ein Einstellen der ersten Gruppe und der dritten Gruppe als Gruppenkandidaten umfasst, welche die Identifikationsinformation der Zielkommunikationsvorrichtung (101) umfassen, falls die dritte Gruppe eingestellt ist.

5. Einstellverfahren gemäß einem der Ansprüche 1 bis 4, wobei
das Bestimmen ein Bestimmen umfasst, ob eine dritte Gruppe eingestellt ist, welche eine Identifikationsinformation einer Kommunikationsvorrichtung (101) umfasst, welche an einem Nutztier angebracht ist, welches sich in einem Kommunikationsbereich (103b) der anderen Relaisvorrichtung (102b) befindet, falls die erste Gruppe nicht eingestellt ist und die andere Relaisvorrichtung (102b) vorhanden ist, und
das Registrieren ein Registrieren der Identifikationsinformation der Zielkommunikationsvorrichtung (101) in der zweiten Gruppe umfasst, falls die dritte Gruppe nicht eingestellt ist.

6. Einstellverfahren gemäß Anspruch 5, wobei
das Einstellen ein Einstellen der zweiten Gruppe und der dritten Gruppe als Gruppenkandidaten umfasst, welche die Identifikationsinformation der Zielkommunikationsvorrichtung (101) umfassen, falls die dritte Gruppe eingestellt ist.

7. Einstellverfahren gemäß Anspruch 4 oder 6, weiter umfassend
Erfassen der Identifikationsinformation der Zielkommunikationsvorrichtung (101), welche an dem Nutztier angebracht ist, welches sich in einem Kommunikationsbereich (103a) eines der mehreren Relaisvorrichtungen (102a, 102b, 102c) befindet, nachdem die Gruppenkandidaten eingestellt sind, und
Registrieren der Identifikationsinformation der Zielkommunikationsvorrichtung (101) in einer Gruppe, welche eine Identifikationsinformation einer Kommunikationsvorrichtung (101) umfasst, welche an einem anderen Nutztier angebracht ist, welches sich in dem Kommunikationsbereich (103a) der Relaisvorrichtung (102a) befindet, aus den Gruppenkandidaten.

8. Einstellverfahren gemäß einem der Ansprüche 4, 6 oder 7, wobei
das Bestimmen ein Bestimmen umfasst, ob einer der Gruppenkandidaten in Gruppen umfasst ist, bei welchen eine Identifikationsinformation von Kommunikationsvorrichtungen (101) registriert ist,
die Kommunikationsvorrichtungen (101) an Nutztieren angebracht sind, welche sich in Kommunikationsbereichen (103b) der zu der Relaisvorrichtung (102a) unterschiedlichen anderen Relaisvorrichtungen (102b) befinden, und
das Registrieren, falls einer der Gruppenkandidaten umfasst ist, ein Registrieren der Identifikationsinformation der Zielkommunikationsvorrichtung (101) in der anderen Gruppe des Gruppenkandidaten, welcher nicht umfasst ist, umfasst.

9. Einstellverfahren gemäß einem der Ansprüche 1 bis 8, weiter umfassend
Bestimmen, ob eine Gruppe eingestellt ist, welche die Identifikationsinformation der Zielkommunikationsvorrichtung (101) umfasst, falls die Identifikationsinformation der Zielkommunikationsvorrichtung (101) erfasst ist, wobei
das Bestimmen, ob die erste Gruppe eingestellt ist, ein Bestimmen umfasst, ob die erste Gruppe eingestellt ist, welche eine Identifikationsinformation einer Kommunikationsvorrichtung (101) umfasst, welche an einem anderen Nutztier angebracht ist, falls die Gruppe nicht eingestellt ist, und
das Bestimmen, ob die andere Relaisvorrichtung (101) vorhanden ist, ein Bezugnehmen auf die Speichereinheit (202) und ein Bestimmen, ob eine andere Vorrichtung (102b) vorhanden ist, deren Abstand von der Relaisvorrichtung (102a) kleiner oder gleich dem vorbestimmten Wert ist, falls die Gruppe nicht eingestellt ist, umfasst.

10. Ein Einstellprogramm, welches einen Computer veranlasst einen Prozess auszuführen, welcher umfasst:
Erfassen einer Identifikationsinformation einer Zielkommunikationsvorrichtung (101), welche an einem Nutztier in einer Nutztiergruppe angebracht ist, welche sich in einem Kommunikationsbereich (103a) von einer von an unterschiedlichen Positionen angeordneten mehreren Relaisvorrichtungen (102a, 102b, 102c) befindet;
Bestimmen, ob eine erste Gruppe eingestellt ist, welche eine Identifikationsinformation einer Kommunikationsvorrichtung (101) umfasst, welche an einem zu dem Nutztier unterschiedlichen anderen Nutztier aus der Nutztiergruppe angebracht ist;
Bezugnehmen auf eine Speichereinheit (202), welche Kombinationen von Relaisvorrichtungen aus den mehreren Relaisvorrichtungen (102a, 102b, 102c) speichert, welche einen Zwischenrelaisvorrichtungsabstand kleiner oder gleich einem vorbestimmten Wert aufweisen, und Bestimmen, ob eine andere Relaisvorrichtung (102b) vorhanden ist, deren Abstand von der Relaisvorrichtung (102a) kleiner oder gleich dem vorbestimmten Wert ist; und
Einstellen einer zweiten Gruppe, welche die Identifikationsinformation der Zielkommunikationsvorrichtung (101) umfasst, falls die erste Gruppe nicht eingestellt ist und die andere Relaisvorrichtung (102b) nicht vorhanden ist.

11. Eine Einstellvorrichtung (104), umfassend:
eine Erfassungseinheit (1101), welche eine Identifikationsinformation einer Zielkommunikationsvorrichtung erfasst, welche an einem Nutztier in einer Nutztiergruppe angebracht ist, welche sich in einem Kommunikationsbereich von einer von an unterschiedlichen Positionen angeordneten mehreren Relaisvorrichtungen befindet;
eine erste Bestimmungseinheit (1102), welche bestimmt, ob eine erste Gruppe eingestellt ist, welche eine Identifikationsinformation einer Kommunikationsvorrichtung umfasst, welche an einem zu dem Nutztier unterschiedlichen anderen Nutztier aus der Nutztiergruppe angebracht ist;
eine zweite Bestimmungseinheit (1104), welche auf eine Speichereinheit Bezug nimmt, welche Kombinationen von Relaisvorrichtungen aus den mehreren Relaisvorrichtungen speichert, welche einen Zwischenrelaisvorrichtungsabstand kleiner oder gleich einem vorbestimmten Wert aufweisen, und bestimmt, ob eine andere Relaisvorrichtung vorhanden ist, deren Abstand von der Relaisvorrichtung kleiner oder gleich dem vorbestimmten Wert ist; und
eine Einstelleinheit (1105), welche eine zweite Gruppe einstellt, welche die Identifikationsinformation der Zielkommunikationsvorrichtung umfasst, falls die erste Bestimmungseinheit (1102) bestimmt, dass die erste Gruppe nicht eingestellt ist, und die zweite Bestimmungseinheit (1104) bestimmt, dass die andere Relaisvorrichtung nicht vorhanden ist.

## Revendications

1. Procédé de réglage exécuté par un ordinateur, le procédé de réglage comprenant les étapes ci-dessous consistant à :
acquérir des informations d'identification d'un dispositif de communication d'objet (101) fixé à un animal d'élevage dans un groupe d'animaux d'élevage situé dans une zone de communication (103a) d'un quelconque dispositif parmi de multiples dispositifs de relais (102a, 102b, 102c) disposés au niveau de différentes positions ;
déterminer si un premier groupe est défini qui inclut des informations d'identification d'un dispositif de communication (101) fixé à un autre animal d'élevage distinct de l'animal d'élevage et parmi le groupe d'animaux d'élevage ;
faire référence à une unité de stockage (202) stockant des combinaisons de dispositifs de relais parmi les multiples dispositifs de relais (102a, 102b, 102c) et présentant une distance entre dispositifs de relais inférieure ou égale à une valeur prédéterminée, et déterminer si un autre dispositif de relais (102b) est présent dont la distance par rapport au dispositif de relais (102a) est inférieure ou égale à la valeur prédéterminée ; et
définir un deuxième groupe incluant les informations d'identification du dispositif de communication d'objet (101) si le premier groupe n'est pas défini et si l'autre dispositif de relais (102b) n'est pas présent.

2. Procédé de réglage selon la revendication 1, comprenant en outre l'étape ci-dessous consistant à :
enregistrer les informations d'identification du dispositif de communication d'objet (101) dans le premier groupe si le premier groupe est défini et si l'autre dispositif de relais (102b) n'est pas présent.

3. Procédé de réglage selon la revendication 2, comprenant en outre l'étape ci-dessous consistant à :
déterminer si un troisième groupe est défini qui inclut l'identification d'un dispositif de communication (101) fixé à un animal d'élevage situé dans une zone de communication (103b) de l'autre dispositif de relais (102b), si le premier groupe est défini et si l'autre dispositif de relais (102b) est présent, dans lequel
l'étape d'enregistrement consiste à enregistrer les informations d'identification du dispositif de communication d'objet (101) dans le premier groupe si le troisième groupe n'est pas défini.

4. Procédé de réglage selon la revendication 3, dans lequel
l'étape de définition consiste à définir le premier groupe et le troisième groupe en qualité de candidats de groupe qui incluent les informations d'identification du dispositif de communication d'objet (101), si le troisième groupe est défini.

5. Procédé de réglage selon l'une quelconque des revendications 1 à 4, dans lequel
l'étape de détermination consiste à déterminer si un troisième groupe est défini qui inclut des informations d'identification d'un dispositif de communication (101) fixé à un animal d'élevage situé dans une zone de communication (103b) de l'autre dispositif de relais (102b), si le premier groupe n'est pas défini et si l'autre dispositif de relais (102b) est présent ; et
l'étape d'enregistrement consiste à enregistrer les informations d'identification du dispositif de communication d'objet (101) dans le deuxième groupe, si le troisième groupe n'est pas défini.

6. Procédé de réglage selon la revendication 5, dans lequel
l'étape de définition consiste à définir le deuxième groupe et le troisième groupe en qualité de candidats de groupe qui incluent des informations d'identification du dispositif de communication d'objet (101), si le troisième groupe est défini.

7. Procédé de réglage selon la revendication 4 ou 6, comprenant en outre les étapes ci-dessous consistant à :
acquérir les informations d'identification du dispositif de communication d'objet (101) fixé à l'animal d'élevage situé dans une zone de communication (103a) de l'un quelconque des multiples dispositifs de relais (102a, 102b, 102c) après que les candidats de groupe sont définis ; et
enregistrer les informations d'identification du dispositif de communication d'objet (101) dans un groupe incluant des informations d'identification d'un dispositif de communication (101) fixé à un autre animal d'élevage situé dans la zone de communication (103a) du dispositif de relais (102a) parmi les candidats de groupe.

8. Procédé de réglage selon l'une quelconque des revendications 4, 6 et 7, dans lequel
l'étape de détermination consiste à déterminer si l'un quelconque des candidats de groupe est inclus dans des groupes dans lesquels des informations d'identification de dispositifs de communication (101) sont enregistrées ;
les dispositifs de communication (101) sont fixés à des animaux d'élevage situés dans des zones de communication (103b) des autres dispositifs de relais (102b) distincts du dispositif de relais (102a) ; et
l'étape d'enregistrement consiste à, si l'un quelconque des candidats de groupe est inclus, enregistrer les informations d'identification du dispositif de communication d'objet (101) dans l'autre groupe de candidat de groupe qui n'est pas inclus.

9. Procédé de réglage selon l'une quelconque des revendications 1 à 8, comprenant en outre l'étape ci-dessous consistant à :
déterminer si un groupe est défini qui inclut les informations d'identification du dispositif de communication d'objet (101), si les informations d'identification du dispositif de communication d'objet (101) sont acquises, dans lequel
l'étape consistant à déterminer si le premier groupe est défini consiste à déterminer si le premier groupe est défini lequel inclut des informations d'identification d'un dispositif de communication (101) fixé à l'autre animal d'élevage, si le groupe n'est pas défini ; et
l'étape consistant à déterminer si l'autre dispositif de relais (101) est présent inclut l'étape consistant à faire référence à l'unité de stockage (202) et l'étape consistant à déterminer si un autre dispositif de relais (102b) est présent dont la distance par rapport au dispositif de relais (102a) est inférieure ou égale à la valeur prédéterminée, si le groupe n'est pas défini.

10. Programme de réglage qui amène un ordinateur à exécuter un processus comprenant les étapes ci-dessous consistant à :
acquérir des informations d'identification d'un dispositif de communication d'objet (101) fixé à un animal d'élevage dans un groupe d'animaux d'élevage situé dans une zone de communication (103a) d'un quelconque dispositif parmi de multiples dispositifs de relais (102a, 102b, 102c) disposés au niveau de différentes positions ;
déterminer si un premier groupe est défini qui inclut des informations d'identification d'un dispositif de communication (101) fixé à un autre animal d'élevage distinct de l'animal d'élevage et parmi le groupe d'animaux d'élevage ;
faire référence à une unité de stockage (202) stockant des combinaisons de dispositifs de relais parmi les multiples dispositifs de relais (102a, 102b, 102c) et présentant une distance entre dispositifs de relais inférieure ou égale à une valeur prédéterminée, et déterminer si un autre dispositif de relais (102b) est présent dont la distance par rapport au dispositif de relais (102a) est inférieure ou égale à la valeur prédéterminée ; et
définir un deuxième groupe incluant les informations d'identification du dispositif de communication d'objet (101) si le premier groupe n'est pas défini et si l'autre dispositif de relais (102b) n'est pas présent.

11. Appareil de réglage (104) comprenant :
une unité d'acquisition (1101) qui acquiert des informations d'identification d'un dispositif de communication d'objet fixé à un animal d'élevage dans un groupe d'animaux d'élevage situé dans une zone de communication d'un quelconque dispositif parmi de multiples dispositifs de relais disposés au niveau de différentes positions ;
une première unité de détermination (1102) qui détermine si un premier groupe est défini qui inclut des informations d'identification d'un dispositif de communication fixé à un autre animal d'élevage distinct de l'animal d'élevage et parmi le groupe d'animaux d'élevage ;
une seconde unité de détermination (1104) qui fait référence à une unité de stockage stockant des combinaisons de dispositifs de relais parmi les multiples dispositifs de relais et présentant une distance entre dispositifs de relais inférieure ou égale à une valeur prédéterminée, et qui détermine si un autre dispositif de relais est présent dont la distance par rapport au dispositif de relais est inférieure ou égale à la valeur prédéterminée ; et
une unité de réglage (1105) qui définit un deuxième groupe incluant les informations d'identification du dispositif de communication d'objet, si le premier groupe est déterminé par la première unité de détermination (1102) comme n'étant pas défini et si l'autre dispositif de relais est déterminé par la seconde unité de détermination (1104) comme n'étant pas présent.
